# EUROPÄISCHE PATENTSCHRIFT

(11) **EP 3 092 189 B1**
(45) Veröffentlichungstag und Bekanntmachung des Hinweises auf die Patenterteilung: **06.02.2019**
(21) Anmeldenummer: 14824793.5
(22) Anmeldetag: 10.12.2014
(51) Int. Cl.: B65G 21/06, B65G 21/20

(54) **BEHÄLTERTRANSPORTANALAGE MIT EINEM AUSWECHSELBAREN BAHNELEMENT**
CONTAINER CONVEYING SYSTEM COMPRISING A REPLACEABLE RAIL ELEMENT
INSTALLATION DE TRANSPORT DE RÉCIPIENTS COMPRENANT UN ÉLÉMENT DE TRAJECTOIRE ÉCHANGEABLE

(30) Priorität: 08.01.2014 DE 102014000052
(43) Veröffentlichungstag der Anmeldung: 16.11.2016
(73) Patentinhaber: KHS GmbH, 44143 Dortmund (DE)
(72) Erfinder: FAHLDIECK, Andreas, 55743 Idar-Oberstein (DE); MALLITZKI, Nils, 55469 Simmern (DE)
(74) Vertreter: Ehmer, Wilfried
(86) Internationale Anmeldenummer: PCT/EP2014/077274
(87) Internationale Veröffentlichungsnummer: WO 2015/104125

(56) Entgegenhaltungen:
- DE-T2- 69 902 944

## Beschreibung

Die Erfindung betrifft eine Behältertransportanlage mit einem auswechselbaren Bahnelement mit einer oberen und unteren Bahnelementebene zum Führen von Behältern.

Behältertransportanlagen werden beispielsweise in Behälterbehandlungsanlagen eingesetzt und führen die zu behandelnden Behälter, beispielsweise Getränkebehälter durch die Behälterbehandlungsanlage hindurch. Hierzu kann sie sowohl starre Bahnelemente, d. h. Bahnelemente, an denen die Behälter entlanggleiten, oder auch rotative Bahnelemente, d. h. Bahnelemente, in denen die Behälter transportiert werden, aufweisen.

Aufgrund der Vielzahl von unterschiedlichen Behälterarten, die üblicherweise in einer Behälterbehandlungsanlage bearbeitet werden, ist es notwendig, dass die Bahnelemente in der Behältertransportanlage auswechselbar angeordnet sind.

Aufgrund häufig auftretender Beschädigungen an den Behältern, insbesondere bei Glasbehältern, sollten die Bahnelemente auch möglichst unempfindlich gegenüber auslaufenden Getränken oder den entstehenden Glassplittern sein.

Um unnötige Standzeiten der Behälterbehandlungsanlage aufgrund eines Bahnelementwechsels oder einer Reinigung zu vermeiden, sollten die Bahnelemente besonders schnell und einfach ausgewechselt werden können. Zudem müssen neben den Bahnelementen auch die dazu verwendeten Befestigungsvorrichtungen besonders einfach und ohne großen Zeitaufwand zu reinigen sein und trotzdem eine sichere Befestigung der Bahnelemente im Betrieb der Behälterbehandlungsanlage gewährleisten.

DE 699 02 944 T2 offenbart eine Behältertransportanlage nach dem Oberbegriff des Anspruchs 1. Aus der DE 699 02 944 T2 ist eine Befestigungsvorrichtung bekannt, wobei ein Verriegelungsmechanismus in der Art eines Bajonettverschlusses vorgesehen wurde und ein zugehöriger Einspannmechanismus mittels Verschraubung. Die DE 10 2009 018 731 A1 zeigt eine Befestigungsvorrichtung in der Art einer Pilskopfverriegelung durch einen kleinen, schwenkbaren Riegelarm und die DE 44 36 201 A1 zeigt wiederum ein Spannelement für Formatteile, bei dem zwischen Bedienelement und Formatteil ein federbelastetes Zwischenstück angeordnet ist.

Der Erfindung liegt somit die Aufgabe zugrunde, eine Behältertransportanlage mit einem Bahnelement bereitzustellen, das die oben genannten Probleme löst.

Die Aufgabe wird gelöst durch eine Behältertransportanlage mit den Merkmalen des Anspruchs 1. Vorteilhafte Weiterbildungen der Erfindung sind in den abhängigen Ansprüchen angegeben.

Erfindungsgemäß weist die Behältertransportanlage ein auswechselbares Bahnelement zum Führen von Behältern mit mindestens einer oberen und einer unteren Bahnelementebene, ein Trägerelement zur Aufnahme des Bahnelementes und eine zwischen mindestens zwei Stellungen drehbar um eine Drehachse an dem Bahnelement gelagerte Reibvorrichtung auf, wobei die Reibvorrichtung in einer ersten Stellung die untere Bahnelementebene mit dem Trägerelement in Richtung der Drehachse fixiert und in einer zweiten Stellung das Bahnelement von dem Trägerelement in Richtung der Drehachse entnehmbar ist und eine Auszugssicherung zur Fixierung der Reibvorrichtung an dem Bahnelement in Drehachsenrichtung angeordnet ist, die ein zum Eingriff an der oberen Bahnelementebene ausgebildeten Sperrriegel aufweist, der zwischen einer Sperrstellung und einer Freigabestellung bewegbar ist. Dabei dienen die Bahnelemente selbst als Gleitleisten/-elemente, an denen die vorbeigeführten Behälter entlangleiten oder an den Bahnelementen sind solche Gleitleisten/-elemente angeordnet, bspw. in Art eines Kantenschutzes oder Geländers. Ein oder mehrere solcher Gleitelemente oder Geländer können in geeigneter Art und Weise aber auch an einem oder mehreren Bahnelementen bspw. mit Stegen oder Haltern angebracht sein.

Der Erfindung liegt die Erkenntnis zugrunde, dass die Kopplung des Bahnelementes an der Behältertransportanlage über Verbindungsvorrichtungen, d.h. über Bauteile, die das Bahnelement mit der Behältertransportanlage verbinden, erfolgen muss, die möglichst einfach ausgestaltet sind, um so eine schnelle und einfache Demontage bzw. Montage des Bahnelementes und ein besonders einfaches Reinigen der Bauteile zu ermöglichen. Dazu gehört auch, dass die zur Kopplung vorgesehene Reibvorrichtung besonders einfach zu erreichen und insbesondere händisch bedienbar ist, da die engen Bauräume oftmals den Einsatz von zusätzlichem Werkzeug deutlich erschweren.

Ein besonderer Vorteil der erfindungsgemäßen Behältertransportanlage ist, dass die am Bahnelement auftretenden Kräfte in Drehachsenrichtung (z-Richtung) zumindest weitestgehend vollständig im Bereich der unteren Bahnelementebene und dem Trägerelement aufgenommen werden. Die am oberen Bahnelement eingreifende Auszugssicherung bleibt damit weitestgehend frei von Kräften, die quer zur z-Achsenrichtung auf das Bahnelement wirken und ist somit vor Beschädigungen oder Fehlfunktionen besonders gut geschützt. Zudem ist sie aufgrund ihrer Position im Bereich des oberen Bahnelementes einfach erreichbar und insbesondere auch händisch, d.h. ohne Werkzeug bedienbar.

Unter Bahnelementen werden im Zusammenhang mit der Erfindung beispielsweise Formatteile, die auf einzelne Getränkebehälter abgestimmt sind, verstanden. Hierzu gehören starre Formteile, an denen die Behälter entlanggleiten. Dies können sowohl linear, also gradlinige Elemente als auch Bahnelemente mit Krümmung sein. Auch werden unter Bahnelementen rotative Elemente verstanden, die eine (aktive) Beförderung des Behälters bewirken. Hierzu gehören beispielsweise angetriebene sternförmige Bahnelemente.

Aufgrund der möglichen Höhen der Behälter weisen die Bahnelemente zumeist mehrere Bahnelementebenen auf, die in Kontakt mit den Behältern, insbesondere auch Getränkeflaschen kommen. Unter Bahnelementebenen werden zumeist flächig ausgebildete Bauteile verstanden, die an einer Außenkante zum Kontakt mit dem Getränkebehälter ausgebildet sind. Von der Erfindung umfasst sind auch ausdrücklich Bahnelemente, die neben der unteren und oberen Bahnelementebene noch eine oder mehrere mittlere Bahnelementebenen aufweisen. In einer sehr speziellen Ausführungsform kann auch nur eine einzige, in der Regel relativ zum Behälter tiefe bzw. untere Bahnelementebene, vorgesehen sein.

Unter der Drehbarkeit der Reibvorrichtung wird verstanden, dass diese um eine insbesondere in z-Richtung des Bahnelementes ausgerichtete eigene Drehachse drehbar ist.

Die Lagerung der Reibvorrichtung kann im Bereich der oberen Bahnelementebene erfolgen. Auch ist eine Lagerung im Bereich der unteren Bahnelementebene möglich, wobei insbesondere auch eine Lagerung sowohl in der oberen als auch in unteren Bahnelementebene ausbildbar ist.

Die Lagerung der Reibvorrichtung kann unterschiedlich ausgebildet sein. So kann beispielsweise die obere und/oder die untere Bahnelementebene eine Ausnehmung (die insbesondere rund ausgebildet ist) aufweisen, an die die Reibvorrichtung angepasst ist, so dass die Reibvorrichtung und die Ausnehmung direkt zusammenwirken. Auch kann beispielsweise ein Lagerelement im Bahnelement oder an der Reibvorrichtung angeordnet sein. Dies kann beispielsweise ein Kugellager oder auch eine Lagerscheibe sein. So können die Lagerscheibe und die Ausnehmung korrespondierend zueinander ausgebildet sein, wobei die Lagerscheibe in beispielsweise der Ausnehmung, d.h. an den Lochflanken der Ausnehmung, angreift.

Im montierten Zustand, beispielsweise am Bahnelement, kann die Reibvorrichtung mindestens zwei verschiedene Stellungen einnehmen, nämlich eine erste Stellung und eine zweite Stellung. Dabei kann die Reibvorrichtung insbesondere derart angeordnet sein, dass diese zumindest zwischen der ersten und zweiten Stellung vor- und zurückdrehbar ist. Auch kann die Reibvorrichtung am Bahnelement frei drehbar (360°) gelagert sein.

Unter der ersten Stellung wird insbesondere eine Verriegelungsstellung verstanden, in der die Reibvorrichtung ein Abheben des Bahnelementes von dem Trägerelement in Drehachsenrichtung der Reibvorrichtung verhindert. Dementsprechend ist auch eine Montage des Bahnelementes mit einer Reibvorrichtung in einer ersten Stellung an dem Trägerelement nicht möglich.

Unter der zweiten Stellung wird eine Entriegelungsstellung verstanden, in der das Bahnelement an dem Trägerelement montierbar und/oder demontierbar ist, d.h. ein montiertes Bahnelement kann in der zweiten Stellung in Richtung der Drehachse (z-Achsenrichtung) auf das Trägerelement aufgesetzt oder von diesem entnommen werden. Vorzugsweise liegt zwischen der ersten Stellung, d.h. der Verriegelungsstellung, und der zweiten Stellung, d.h. der Entriegelungsstellung, ein Drehwinkel von ca. 90°, wobei auch beispielsweise zwei Verriegelungsstellungen und zwei Entriegelungsstellungen vorliegen können, die abwechselnd einen Drehwinkel von 90° zueinander aufweisen.

Auch kann die Reibvorrichtung frei, d.h. in einem Winkel von 360° drehbar gelagert sein, wobei sie mindestens die erste und zweite Stellung einnehmen kann.

Die Fixierung der unteren Bahnelementebene an dem Trägerelement mittels der Reibvorrichtung erfolgt insbesondere formschlüssig. Dabei kann die Reibvorrichtung spielbehaftet bzw. passgenau (d.h. spielfrei) ausgebildet sein und zusätzlich auch eine Spannkraft zwischen einer Bahnelementebene (bspw. der unteren) und dem Trägerelement ausüben.

Unter einem Trägerelement wird insbesondere ein Bauteil der Getränketransportanlage verstanden, auf dem sich ein Bahnelement zumindest in z-Achsenrichtung, d.h. vertikal abstützt.

Die Auszugssicherung ist ein Bauteil an der Reibvorrichtung, das ein Lösen oder Entfernen der Reibvorrichtung von dem Bahnelement in Drehachsenrichtung und insbesondere nach oben verhindern kann.

Hierfür weist die Auszugssicherung mindestens einen Sperrriegel auf, der zum Eingriff in die obere Bahnelementebene ausgebildet ist. Unter dem Eingriff wird in diesem Fall beispielsweise das Abstützen des Sperrriegels an einer Oberfläche der oberen Bahnelementebene verstanden. So kann der Sperrriegel beispielsweise eine Stützfläche aufweisen, die in der Sperrstellung mit der Unterseite der oberen Bahnelementebene in Kontakt ist. Auch kann der Sperrriegel ergänzend oder bei einer alternativen Ausführungsform beispielsweise mit der Oberseite der oberen Bahnelementebene oder einer Flanke einer Ausnehmung in der oberen Bahnelementebene in Kontakt sein, wenn der Sperrriegel in der Sperrstellung ist.

Alternativ zur Anordnung eines Sperrriegels können beispielsweise auch zwei oder mehr Sperrriegel angeordnet sein, die beispielsweise diametral um die Drehachse der Reibvorrichtung an der Reibvorrichtung angeordnet sind. Hierdurch wird eine besonders sichere Fixierung der Reibvorrichtung am Bahnelement ermöglicht. Dabei wird unter der Sperrstellung die Position verstanden, in der die Entnahme der Reibvorrichtung zumindest in Drehachsenrichtung nach oben von dem Bahnelement blockiert wird. Dementsprechend kann die Reibvorrichtung in der Freigabestellung von dem Bahnelement entfernt werden.

Die Auszugssicherung und/oder insbesondere der Sperrriegel kann beispielsweise einstückig mit der Reibvorrichtung oder einem Bauteil der Reibvorrichtung ausgebildet sein.

Die Auszugssicherung ist somit für eine besonders schnelle Demontage der Reibvorrichtung vom Bahnelement, beispielsweise um diese zu reinigen, insbesondere als Schnellverschluss ausgebildet.

Nach der Erfindung ist der Sperrriegel quer zur Drehachse bewegbar. D.h. die Bewegungsrichtung des Sperrriegels, um von der Sperrstellung in die Freigabestellung bzw. von der Freigabestellung in die Sperrstellung zu gelangen, steht weitestgehend senkrecht auf der Drehachse, d.h. sie verläuft ca. in einem Winkel von 90° zur Drehachse.

Hierfür kann der Sperrriegel unterschiedlich gelagert sein. Beispielsweise kann er zentral in einer Führung gelagert sein. Vorzugsweise ist jedoch der Sperrriegel mit einem ersten Ende an der Reibvorrichtung angeordnet und ein dem ersten Ende gegenüberliegendes zweites Ende ist als freies Ende ausgebildet. Folglich kann der Sperrriegel mit dem ersten Ende mit der Reibvorrichtung verbunden sein, während das zweite Ende unverbunden ausgebildet ist. Bei einem derartig angeordneten Sperrriegel, der zusätzlich quer zur Drehachse bewegbar ist, ist das freie Ende entlang eines Kreisbogenabschnitts bewegbar. Der Kreisbogenabschnitt weist jedoch eine derart geringe Höhe auf, dass die Bewegung des freien Endes annähernd senkrecht zur Drehachse verläuft. Unter quer zur Drehachse werden somit auch Bewegungsabläufe des freien Endes des Sperrriegels verstanden, die entlang eines Kreisbogenabschnitts mit minimaler Stichhöhe verlaufen.

Um die Bewegung des Sperrriegels zwischen der Sperr- und der Freigabestellung besonders einfach auszugestalten, ist der Sperrriegel besonders bevorzugt federnd gelagert. Somit kann beispielsweise das freie Ende gegen eine Biegespannung bewegbar sein. Dabei kann die Federung insbesondere derart ausgebildet sein, dass der Sperrriegel von der Sperrstellung in die Freigabestellung durch eine äußere Kraft gegen die Federspannung bewegt wird und von der Freigabestellung automatisch in die Sperrstellung zurückschnappt.

Nach einer Weiterbildung der Erfindung ist der Sperrriegel derart angeordnet, dass er sich ausgehend von seinem ersten Ende in oder durch eine Ausnehmung in der oberen Bahnelementebene erstreckt. Das erste Ende kann dabei beispielsweise im Bereich (unterhalb) der Unterseite der oberen Bahnelementebene, d.h. zwischen der oberen und unteren Bahnelementebene angeordnet sein und sich mit seinem zweiten Ende in Richtung des oberen Bahnelementes erstrecken. Vorzugsweise ist das erste Ende des Sperrriegels jedoch oberhalb der Oberseite der oberen Bahnelementebene angeordnet und das zweite Ende erstreckt sich in/durch die untere Bahnelementebene.

Nach einer Weiterbildung der Erfindung ist die Reibvorrichtung mehrteilig ausgebildet und weist einen Reibkörper, einen Reibkopf und/oder einen Reibfuß auf. Der Reibkörper überbrückt den Abstand zwischen der oberen Bahnelementebene und der unteren Bahnelementebene zumindest teilweise. Der Reibkopf kann mit dem Reibkörper einteilig ausgebildet sein, während der Reibfuß als separates Bauteil mit dem Reibkörper verbindbar ist. Auch ist es beispielsweise möglich, Reibköper und Reibfuß einteilig auszubilden und einen separaten Reibkopf anzuordnen. Alternativ können sowohl der Reibkopf als auch der Reibfuß jeweils separat zum Reibkörper ausgebildet und mit diesem verbindbar sein.

Für eine besonders einfache Ausbildung ist zumindest der Reibkörper flächig ausgebildet. Alternativ kann auch der Reibkopf und/oder der Reibfuß flächig ausgebildet sein, insbesondere sofern sie einteilig mit dem Reibkörper ausgebildet sind. Durch die flächige Ausbildung kann der Reibköper beispielsweise besonders exakt aus einem plattenförmigen Baukörper, insbesondere aus einer Metallplatte hergestellt werden.

Bei einer mehrteiligen Ausbildung aus Reibkörper, Reibkopf und/oder Reibfuß kann die jeweilige Verbindung zwischen den Bauteilen durch ein Verklemmen oder durch einen Formschluss erfolgen. Auch kann beispielsweise der Reibkopf auf den Reibkörper aufsteckbar (verbindbar) sein. Insbesondere ein separat ausgebildeter Reibfuß kann mit dem Reibkörper beispielsweise über eine Verbindungsvorrichtung, die z.B. eine Rastlasche am Reibkörper oder Reibfuß aufweist und zum Einrasten in ein dazu korrespondierendes Rastelement ausgebildet ist, verbunden werden.

Nach einer Weiterbildung der Erfindung weist die Reibvorrichtung eine Verdrehsicherung gegen ein unbeabsichtigtes Verdrehen um die Drehachse auf. Die Verdrehsicherung kann derart ausgebildet sein, dass sie eine unbeabsichtigte Drehbewegung der Reibvorrichtung in der ersten Stellung und/oder in der zweiten Stellung blockiert. Die Verdrehsicherung ist insbesondere dazu ausgelegt, ein Verdrehen aufgrund der im Betrieb der Behältertransportanlage auftretenden Vibrationen zu verhindern.

Die Verdrehsicherung kann eine Drehbewegung vollständig blockieren. Alternativ oder ergänzend kann sie das Verdrehen der Reibvorrichtung deutlich erschweren, so dass beispielsweise die im Betrieb auftretenden Kräfte nicht ausreichen, um ein Verdrehen der Reibvorrichtung zu bewirken.

Insbesondere zum vollständigen Blockieren der Drehbewegung weist die Verdrehsicherung besonders bevorzugt ein Rastelement mit einer dazu korrespondierend ausgebildeten Rastelementaufnahme auf, in die das Rastelement eingreifen kann. Hierfür kann beispielsweise ein Riegelelement angeordnet sein, das in eine Ausnehmung eingreift oder an einen Vorsprung angreift. Vorzugsweise umfasst der Sperrriegel das Rastelement und die Ausnehmung in der oberen Bahnelementebene die Rastelementaufnahme.

Der Sperrriegel kann somit eine Doppelfunktion aufweisen, bei der er zum einen das Verdrehen der Reibvorrichtung um die Drehachse verhindert und/oder erschwert und somit als Rastelement wirkt und zum anderen den Auszug der Reibvorrichtung aus dem Bahnelement in der ersten und/oder zweiten Stellung blockiert, d.h. als Auszugssicherung wirkt. Die Ausnehmung weist vorzugsweise als Rastelementaufnahme ausgebildete Ausbuchtungen auf, in die der Sperrriegel, d.h. das Rastelement, eingreifen kann.

Die Ausbuchtungen sind in der vorzugsweise rund ausgebildeten Ausnehmung symmetrisch, insbesondere mit einem gleichmäßigen Abstand zueinander angeordnet. So können die Ausbuchtungen beispielsweise in einem Abstand von 90°, d.h. kreuzweise an der Ausnehmung angeordnet sein. Dabei sind insbesondere die Abschnitte der Ausnehmung zwischen den Ausbuchtungen weiterhin zur Drehlagerung der Reibvorrichtung ausgebildet.

Alternativ oder ergänzend kann wie bereits oben erwähnt, die nötige Haftkraft zwischen der Reibvorrichtung und beispielsweise dem Bahnelement erhöht werden, um eine Verdrehsicherung auszubilden. Hierfür ist nach einer Weiterbildung der Erfindung eine Klemmvorrichtung angeordnet, die insbesondere als Klemmring ausgebildet ist. Bei einer runden Ausnehmung beispielsweise einer runden Lagerung der Reibvorrichtung kann dieser beispielsweise als elastischer O-Ring ausgebildet sein. Dieser erhöht die Haftkraft zwischen der Reibvorrichtung und dem Bahnelement, insbesondere der oberen Bahnelementebene und/oder der unteren Bahnelementebene. Die derart ausgebildete Klemmvorrichtung erhöht somit die für eine Verdrehung notwendige Kraft derart, dass ein unbeabsichtigtes Verdrehen insbesondere im Betrieb der Behältertransportanlage verhindert wird, die Reibvorrichtung jedoch weiterhin beispielsweise händisch ohne zusätzliche Werkzeuge durch eine bedienende Person von der ersten in die zweite bzw. von der zweiten in die erste Stellung bewegt werden kann.

Zur Fixierung des Bahnelementes an dem Trägerelement in Drehachsenrichtung ist nach einer Weiterbildung der Erfindung vorgesehen, dass die Reibvorrichtung ein Riegelelement aufweist, das in der ersten Stellung eine formschlüssige Verbindung mit dem Trägerelement aufweist.

Die Fixierung erfolgt mindestens in Abnahmerichtung des Bahnelementes, d.h. beispielsweise in Drehachsenrichtung nach oben. Das Riegelelement ist derart ausgebildet, dass es zumindest zum Eingriff in ein weiteres Bauteil oder zum Umgreifen von ein oder mehreren Bauteilen ausgebildet ist. Somit wird unter einem Riegelelement ein Baukörper verstanden, der mit dem Trägerelement in Kontakt kommt und gemeinsam mit diesem die Abnahme des Bahnelementes vom Trägerelement in Drehachsenrichtung blockiert.

Besonders bevorzugt weist das Riegelelement eine obere Reibnase und eine untere Reibnase auf, wobei die obere Reibnase zum Eingriff an der Oberseite der unteren Bahnelementebene und die untere Reibnase zum Eingriff an der Unterseite des Trägerelementes ausgebildet und angeordnet sind.

Unter einer Reibnase wird ein aus der Reibvorrichtung (oder dem Reibkörper/Reibfuß) herausragender Vorsprung oder eine in die Reibvorrichtung (oder den Reibkörper/Reibfuß) eingebrachte Ausnehmung verstanden. Dabei ist die obere Reibnase derart ausgebildet und angeordnet, dass sie in der ersten Stellung mit einem zur unteren Reibnase ausgerichteten Abschnitt an die Oberseite des unteren Bahnelementes angreift (in Kontakt ist), während die untere Reibnase derart ausgebildet und ausgerichtet ist, dass sie mit einem zur oberen Reibnase ausgerichteten Abschnitt an die Unterseite des Trägerelementes angreift. Die Reibnasen sind insbesondere einstückig mit dem Reibkörper oder Reibfuß ausgebildet.

Die untere Bahnelementebene und das Trägerelement, welche insbesondere beide plattenförmig, d.h. flächig ausgebildet sind, werden somit zwischen der oberen und der unteren Reibnase fixiert. Dabei können die untere Bahnelementebene und das Trägerelement durch die Reibnasen miteinander verspannt werden. Es kann jedoch auch ein spannungsloses Fixieren, beispielsweise über eine spielfreie Passung erfolgen. Unter einem spielfreien Fixieren wird dabei verstanden, dass die Reibvorrichtung eine Bewegung des Bahnelementes vom Trägerelement in Drehachsenrichtung verhindert, jedoch keinen Spanndruck auf die untere Bahnelementebene und das Trägerelement überträgt.

Folglich ist die Fixierung zwischen dem Trägerelement und der unteren Bahnelementebene wie bereits oben erwähnt insbesondere als formschlüssige Verbindung ausgebildet.

Ein Vorteil der Fixierung ist, dass die handhabende Person die Reibvorrichtung auch werkzeuglos nur händisch bedienen kann. Dies gilt insbesondere für eine spielfreie Ausbildung. Hierfür ist es auch vorteilhaft, wenn die Reibnasen besonders kurz, beispielsweise im Bereich von 5 mm oder kürzer ausgebildet sind. Eine besonders stabile Fixierung wird zudem erreicht, wenn vorzugsweise neben einer oberen und einer unteren Reibnase jeweils eine dazu diametral um die Drehachse angeordnete zweite obere Reibnase und zweite untere Reibnase angeordnet sind. Der Reibfuß kann somit zwei diametral zueinander stehende Reibklauen aufweisen, deren jeweilige klauenartige Öffnung quer zur Drehachse und von der Drehachse weg zeigend ausgerichtet ist, und in der ersten Stellung eine formschlüssige Verbindung zwischen dem Trägerelement und der unteren Bahnelementebene ausbilden.

Alternativ oder ergänzend zur oberen und/oder unteren Reibnase weist das Riegelelement einen Reibriegel oder eine Reibklammer auf. Der Reibriegel ist dabei entsprechend den Reibnasen mit der Reibvorrichtung, d.h. mit einem Reibkörper um die Drehachse drehbar. Er ist jedoch im Gegensatz zu den Reibnasen nicht als Vorsprung oder Ausnehmung, sondern insbesondere als separater Baukörper, der mehrteilig am Reibkörper/Reibfuß ausgebildet. Dabei weist der Reibriegel insbesondere eine gegenüber einer Reibnase größere Länge auf, d.h. der Abstand zwischen seinem freien Ende und der Drehachse ist größer als bei den Reibnasen.

Die Reibklammer ist ebenfalls insbesondere als separater Baukörper mit einem Reibkörper verbunden. Dabei kann die Reibklammer beispielsweise auch als Reibfuß ausgebildet sein. Die Reibklammer weist insbesondere zwei Arme auf, die zum Eingriff am Trägerelement ausgebildet sind.

Besonders bevorzugt weist die Reibklammer zwei zueinander zeigende, insbesondere quer zur Drehachse ausgerichtete, freie Enden auf. Darunter wird insbesondere verstanden, dass an den freien Enden zwei stirnseitige Flächen oder Abschnitte sind, die aufeinander zu zeigen und die in der montierten Position diametral um die Drehachse angeordnet sind.

Um eine besonders einfache Fixierung des Reibriegels oder der Reibklammer zu erreichen, sind diese insbesondere zum Eingriff in eine Ausnehmung im Trägerelement aufbildet. Dafür ist nach einer Weiterbildung der Erfindung vorgesehen, dass der Reibriegel und/oder die Reibklammer jeweils korrespondierend zu einer am Trägerelement angeordneten Nut ausgebildet sind.

Die Anordnung der Nut am Trägerelement kann unterschiedlich erfolgen und ist abhängig von der Ausrichtung des Reibriegels. Bei einer Reibvorrichtung, die sich beispielsweise durch die untere Bahnelementebene erstreckt und bei der der Reibriegel oder die Reibklammer unterhalb der unteren Bahnelementebene angeordnet ist, kann auch die Nut an einem Bereich des Trägerelementes angeordnet sein, der in der montierten Position unterhalb der unteren Bahnelementebene angeordnet ist. Vorzugsweise ist die Nut jedoch oberhalb der Oberseite der unteren Bahnelementebene angeordnet. D.h., der Reibriegel ist unabhängig davon, ob die Reibvorrichtung sich durch die untere Bahnelementebene erstreckt, zwischen der oberen und der unteren Bahnelementebene angeordnet, wobei die Nut an einem Abschnitt des Trägerelementes angeordnet ist, der sich durch die untere Bahnelementebene in den Bereich zwischen der unteren und der oberen Bahnelementebene erstreckt.

Die Nut kann das Trägerelement beispielsweise vollständig umlaufen. Auch kann die Nut Abschnitte des Trägerelementes umlaufen oder als Ausnehmung (Loch etc.) ausgebildet sein. Der Querschnitt der Nut ist beliebig ausbildbar.

Vorzugsweise ist die Nut zusätzlich als Verdrehsicherung ausgebildet, insbesondere bei der Verwendung einer Reibklammer. Hierfür weist die Nut eine ovale oder eine eckige, insbesondere eine quadratische oder eine rechtwinklige Grundform auf. D.h. sie ist im Horizontalquerschnitt entsprechend den oben aufgeführten Formen ausgebildet. Insbesondere bei der Ausbildung einer eckigen Form weist die Nut mindestens vier Abschnitte auf, die winklig aneinander stoßen, wobei sich mindestens zwei Abschnitte zumindest teilweise diametral gegenüber stehen und wobei der Abstand von zwei sich diametral gegenüberstehenden Winkelecken größer oder gleich ist als der Abstand von zwei diametral zueinander stehenden Flächen. Die Reibklammer ist somit vorzugsweise derart ausgebildet und angeordnet, dass sie bei einer Bewegung zwischen der ersten und zweiten Stellung quer zur Drehachse ausgelenkt wird. Dabei wird unter quer zur Drehachse entsprechend der obigen Ausführungen auch eine Bewegung verstanden, die auf einer leicht kreisbogenabschnittartig geformten Bewegungsbahn erfolgt.

Die Reibklammer kann dabei unterschiedlich ausgebildet sein, d.h., die Reibklammer kann beispielsweise eine Auslenkung bei der Bewegung von der ersten in die zweite Position erfahren und in der zweiten Position in der ausgelenkten Stellung bleiben. Alternativ kann die Reibklammer beispielsweise auch nur aufgrund des Überwindens der Verdrehsicherung ausgelenkt werden und sowohl in der ersten Stellung als auch in der zweiten Stellung in der gleichen Position sein, d.h. beispielsweise ohne Auslenkung vorliegen.

Insbesondere beim Transport von Glasbehältern (Glasflaschen) kommt es zu Glasbruch in der Behältertransportanlage. Die dabei auftretenden Scherben oder Splitter müssen zum weiteren Betrieb aus der Vorrichtung entfernt werden. Hierfür müssen häufig die Bahnelemente demontiert und möglichst schnell wieder montiert werden, um einen sicheren und fortlaufenden Betrieb zu gewährleisten. Problematisch ist hierbei, dass insbesondere kleine Splitter in die Reibvorrichtung eindringen können und die Reibvorrichtung nicht mehr sicher bedient und insbesondere nur noch erschwert von der ersten in die zweite Stellung gedreht werden kann. Um dies zu verhindern, ist nach einer Weiterbildung der Erfindung vorgesehen, dass die Reibvorrichtung mindestens einen Scherbenschutz aufweist.

Der Scherbenschutz kann flächig ausgebildet sein und deckt insbesondere den Bereich der Bahnelementebene ab, durch den die Reibvorrichtung hindurch greift. Der Scherbenschutz kann als separater Baukörper, beispielsweise als ringförmiger Baukörper ausgebildet sein. Der Scherbenschutz kann insbesondere auf der Oberseite der unteren und/oder oberen Bahnelementebene angeordnet sein.

Auch kann der Scherbenschutz beispielsweise mit der Reibvorrichtung verbunden (lösbar oder unlösbar) sein, so dass dieser beim Entfernen der Reibvorrichtung mit entnommen wird. Hierfür ist ein unterer Scherbenschutz insbesondere im Bereich der oberen Reibnasen angeordnet, der die Ausnehmung in der unteren Bahnelementebene (Öffnung) abdeckt, durch die die unteren Reibnasen bei der Montage durchgeführt werden. Hierdurch wird verhindert, dass Glasscherben, Splitter, Staub oder auch anderweitige Verschmutzungen von oben in den Bereich der unteren Reibnasen bzw. des Trägerelementes eindringen können.

Alternativ oder ergänzend kann beispielsweise auch der Reibkopf einen oberen Scherbenschutz aufweisen. Der obere Scherbenschutz kann entsprechend dem unteren Scherbenschutz als separates Bauteil oder beispielsweise mit der Reibvorrichtung oder dem Reibkopf einstückig ausgebildet sein. Auch der obere Scherbenschutz ist derart ausgebildet, dass beispielsweise Glassplitter o.ä. nicht oder nur erschwert in den Lagerbereich der Reibvorrichtung an der oberen Bahnelementebene eindringen können. Somit ist auch nach einem Glasbruch eine sichere Drehbewegung der Reibvorrichtung und insbesondere auch eine sichere Bewegung der Sperrriegel an der Reibvorrichtung möglich.

Neben der Reibvorrichtung, die eine Fixierung des Bahnelementes am Trägerelement in Drehachsenrichtung ermöglicht, ist nach einer Weiterbildung der Erfindung eine Positioniervorrichtung zur Fixierung des Bahnelementes quer zur Richtung der Drehachse angeordnet. Die Positioniervorrichtung ist somit dafür vorgesehen, alle (oder zumindest einen Großteil) der auftretenden Kräfte aufzunehmen, die quer zur Drehachse, d.h. in einer x-y-Ebene des Bahnelementes auftreten.

Die Positioniervorrichtung kann als separater Baukörper ausgebildet sein und eine weitere Verbindung zwischen der Behältertransportanlage und dem Bahnelement ausbilden. Nach einer Weiterbildung der Erfindung ist die Positioniervorrichtung jedoch am Trägerelement angeordnet. Hierdurch ist eine besonders einfache konstruktive Ausgestaltung möglich, die zudem kostengünstig herstellbar ist.

Die Positioniervorrichtung ist insbesondere dafür vorgesehen, dass sie am Bahnelement eingreift. Hierfür ist besonders bevorzugt vorgesehen, dass die Positioniervorrichtung mindestens einen Aufnahmebolzen und eine zu dem Aufnahmebolzen korrespondierende Bolzenaufnahme aufweist, wobei die Bolzenaufnahme insbesondere an der unteren Bahnelementebene und der Aufnahmebolzen insbesondere an dem Trägerelement angeordnet ist. Die Positioniervorrichtung kann somit beispielsweise als in Drehachsenrichtung sich erstreckender Bolzen ausgebildet sein, der in einer als Loch ausgebildete Bolzenaufnahme einführbar ist. Dabei kann der Aufnahmebolzen insbesondere auch als Abschnitt am Trägerelement ausgebildet sein, wodurch wiederum eine besonders einfache konstruktive Ausgestaltung möglich wird.

Der Bolzen und die Bolzenaufnahme weisen beispielsweise einen runden Querschnitt auf, der zusätzlich möglichst groß ist, um die wirkenden Kräfte besonders gut zu verteilen, so dass durch die Reduktion der Materialbelastung aufgrund einer geringeren Druckspannungen, die Lochlaibung verringert ausgeführt werden kann. Die Positioniervorrichtung kann derart ausgebildet und angeordnet sein, dass das Bahnelement senkrecht, d.h. in Drehachsenrichtung aufgesetzt werden kann, wodurch eine besonders einfache Montage/Demontage des Bahnelementes ermöglicht wird und insbesondere beispielsweise vorhandene Glassplitter die Demontage/Montage des Bahnelementes nicht behindern.

Bei einer vorteilhaften Ausführungsform ist die Positioniervorrichtung derart angeordnet, dass die Drehachse der Reibvorrichtung senkrecht über einer Mittelachse (die Achsen liegen übereinander) der Positioniervorrichtung, insbesondere eines Aufnahmebolzens und einer Bolzenaufnahme steht. Hierdurch werden auftretende Querkräfte besonders sicher von der Positioniervorrichtung aufgenommen, da keine zusätzlichen Biegekräfte zwischen dem Abschnitt der Positioniervorrichtung und dem Abschnitt der Reibvorrichtung und des Trägerelementes entstehen können.

Das Trägerelement kann ebenfalls vielseitig ausgebildet sein. Beispielsweise kann das Trägerelement plattenförmig mit einer Ausnehmung (einem Loch) ausgebildet sein, durch das die Reibvorrichtung sich erstreckt und beispielsweise mittels der Reibklaue (Reibnasen) angreift. Alternativ kann beispielsweise auch ein Reibriegel an die Unterseite eines plattenförmigen Trägerelementes angreifen.

Nach einer Weiterbildung der Erfindung weist das Trägerelement jedoch mindestens einen Aufnahmeschenkel auf. Der Aufnahmeschenkel ist zum Angriff der Reibnasen, des Reibriegels und/oder der Reibklammer ausgebildet. Um eine besonders sichere Fixierung der Reibvorrichtung zu ermöglichen, sind zudem vorzugsweise zwei Aufnahmeschenkel ausgebildet, die insbesondere diametral und beispielsweise sich quer einer Drehachse erstreckend zueinander angeordnet sind, so dass beispielsweise diametral angeordnete Reibnasen gleichzeitig an den Aufnahmeschenkeln angreifen.

Die Aufnahmeschenkel können beispielsweise bogenförmig ausgebildet sein und mit jeweils einem freien Ende aufeinander zu zeigen. Vorzugsweise ist zudem an einem freien Ende des Aufnahmeschenkels ein Drehbegrenzungsanschlag ausgebildet. Dabei kann beispielsweise an einem ersten Aufnahmeschenkel ein Drehbegrenzungsanschlag ausgebildet sein, der die Drehbewegung in der ersten Stellung stoppt und an dem zweiten Aufnahmeschenkel kann ein Drehbegrenzungsanschlag ausgebildet sein, der die Drehbewegung der Reibvorrichtung in der zweiten Stellung stoppt.

Alternativ oder zusätzlich weist zudem eine im Bereich des Reibkopfes angeordnete Verdrehbegrenzung Drehbegrenzungsanschläge auf. Hierbei weist ein Reibkopf einen Verdrehriegel auf, der zu einem in der oberen Bahnelementebene angeordneten bogenförmigen Schlitz korrespondierend ausgebildet ist. Der Verdrehriegel ist mit der Reibvorrichtung gemeinsam von der ersten in die zweite Stellung und umgekehrt drehbar, wobei der Verdrehriegel jeweils, sobald die erste oder zweite Stellung erreicht ist, an einen Endanschlag (Drehbegrenzungsanschlag) des bogenförmigen Schlitzes anschlägt und so eine weitere Verdrehung blockiert.

Das Bahnelement weist wie bereits oben beschrieben zwei oder mehrere Bahnelementebenen auf. Vorzugsweise sind die untere Bahnelementebene und die obere Bahnelementebene identisch ausgebildet. Hierdurch kann die Vielzahl der unterschiedlichen Bauteile deutlich reduziert werden. Auch ist es beispielsweise möglich, die Bahnelemente spiegelsymmetrisch einzusetzen, d.h. sie können sowohl für eine Linkslauf- als auch für eine Rechtslaufanlage verwendet werden. Hierdurch können insbesondere Herstellungskosten verringert werden.

Des Weiteren sind vorzugsweise insbesondere rotative Bahnelemente aus mindestens zwei Bahnelementsegmenten ausgebildet, die jeweils zueinander korrespondierende Verbindungsabschnitte aufweisen, wobei die Verbindungsabschnitte insbesondere formschlüssig in die Richtung quer zur Drehachse miteinander verbunden sind. Dabei bilden mehrere Bahnelementsegmente zusammengesetzt beispielsweise ein rotatives Bahnelement aus. Die Verbindungsabschnitte können als Puzzleverbindung ausgebildet sein, d.h. sie bestehen beispielsweise aus einem Zapfensteg mit einem beispielsweise runden Zapfenkopf und Ausnehmungen, die auf den Zapfenkopf und den Zapfensteg korrespondierend ausgebildet sind. Hierdurch ist eine Montage/Demontage in Drehachsenrichtung möglich, wobei im montierten Zustand quer zur Drehachsenrichtung eine Relativbewegung der verbundenen Bahnelementsegmente zueinander verhindert wird.
- Fig. 1: zeigt schematisch in einer perspektivischen Darstellung einen Teilabschnitt eines Bahnelementes mit einer Reibvorrichtung in der ersten Stellung und einer Reibvorrichtung in der zweiten Stellung;
- Fig. 2: zeigt perspektivisch in einer schematischen Darstellung die Reibvorrichtungen aus Fig. 1 in einer Explosionsdarstellung;
- Fig. 3: zeigt schematisch im Querschnitt die Reibvorrichtung aus Fig. 1 und 2;
- Fig. 4a: zeigt schematisch in einer perspektivischen Darstellung einen Teilabschnitt eines Bahnelementes mit einer weiteren Ausführungsform einer Reibvorrichtung in der ersten Stellung;
- Fig. 4b: zeigt schematisch im Querschnitt die Reibvorrichtung aus Fig. 4a;
- Fig. 5a: zeigt schematisch in einer perspektivischen Darstellung einen Teilabschnitt eines Bahnelementes mit einer dritten alternativen Ausführungsform einer Reibvorrichtung in der ersten Stellung;
- Fig. 5b: zeigt perspektivisch in einer schematischen Darstellung die Reibvorrichtung aus Fig. 5a;
- Fig. 6a: zeigt perspektivisch in einer schematischen Darstellung einen Teilabschnitt eines Bahnelementes mit einer vierten alternativen Ausführungsform einer Reibvorrichtung in der ersten Stellung;
- Fig. 6b: zeigt perspektivisch in einer schematischen Darstellung die Reibvorrichtung aus Fig. 6a im Querschnitt;
- Fig. 7: zeigt schematisch in einer perspektivischen Darstellung ein sternförmiges Bahnelement zum rotativen Transport von Behältern mit zwei Bahnelementsegmenten;
- Fig. 8: zeigt schematisch in einer perspektivischen Darstellung eine untere Bahnelementebene des rotativen Bahnelementes aus Fig. 7 mit Reibvorrichtungen in der ersten Stellung.

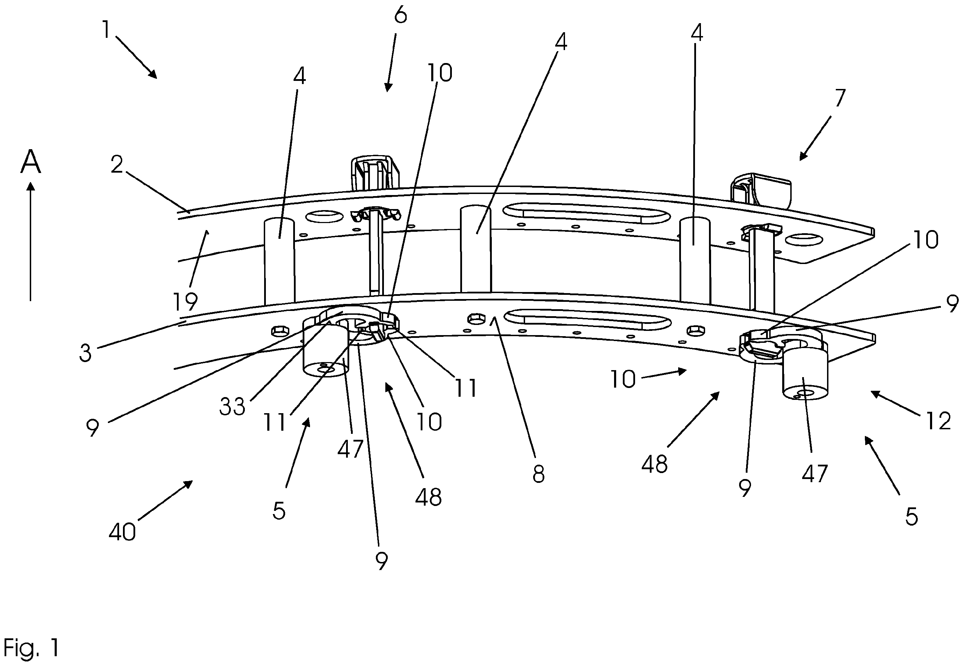

Fig. 1 zeigt schematisch in einer perspektivischen Darstellung einen Teilabschnitt eines starren Bahnelementes 1 zum Führen von Behältern (hier nicht dargestellt). Das Bahnelement 1 weist eine obere Bahnelementebene 2 und eine untere Bahnelementebene 3 auf, die über einen Abstandshalter 4 miteinander verbunden sind. Das Bahnelement 1 ist auf einem Trägerelement 5 aufgesetzt. Wie oben ausgeführt, dienen die Bahnelemente als Gleitleisten/-elemente, an denen die vorbeigeführten Behälter entlangleiten oder an den Bahnelementen sind solche Gleitleisten/- elemente angeordnet, bspw. in Art eines Kantenschutzes oder Geländers. Ein oder mehrere solcher Gleitleisten/-elemente oder Geländer können in geeignerter Art und Weise aber auch an einem oder mehreren Bahnelementen bspw. mit Stegen oder Haltern angebracht sein. Derartige Gleitleisten/-elemente sind bspw. aus einem geeigneten Kunststoff gebildet oder damit beschichtet. Nachfolgend sind solche separaten Gleitleisten/-elemente nicht dargestellt oder näher beschrieben, können aber bei allen genannten Ausführungsformen vorgesehen werden, abhängig von der jeweiligen Transportaufgabe bzw. den zu transportiertenden Behältern.

Weiter sind zwei identisch ausgebildete Reibvorrichtungen 6, 7 angeordnet, die das Bahnelement 1 am Trägerelement 5 in eine Drehachsenrichtung A nach oben (durch einen Pfeil dargestellt) fixieren. Dabei ist eine erste Reibvorrichtung 6 in ihrer ersten Stellung dargestellt, d.h. sie fixiert das Bahnelement 1 am Trägerelement 5 und eine zweite Reibvorrichtung 7 ist in ihrer zweiten Stellung dargestellt, d.h., das Bahnelement 1 mit der Reibvorrichtung 7 wäre von dem Trägerelement 5 entnehmbar. Somit fixiert die erste Reibvorrichtung 6 das Bahnelement 1 in Drehachsenrichtung A am Trägerelement 5, während die zweite Reibvorrichtung 7 das Bahnelement 1 nicht fixiert und eine Entnahme des Bahnelementes 1 nicht blockiert.

Das Trägerelement 5 ist mehrteilig ausgebildet und weist einen Trägerzapfen 47, der in diesem Fall rund ausgebildet ist, und eine an dem Trägerzapfen 47 angeordnete Trägerspange 48 auf, die mit einer Oberseite (hier nicht dargestellt) an einer Unterseite 8 der unteren Bahnelementebene 3 anliegt.

Die Trägerspange 48 weist in dieser Ausführung zwei bogenförmige Aufnahmeschenkel 9 auf, deren jeweils freie Enden 10 zueinander zeigend ausgerichtet und angeordnet sind. An den freien Enden 10 der Aufnahmeschenkel 9 ist jeweils ein Drehbegrenzungsanschlag 11 angeordnet. Die Drehbegrenzungsanschläge 11 begrenzen die Drehmöglichkeit der Reibvorrichtung 6, 7. D.h. ein erster Drehbegrenzungsanschlag 11 stoppt die Reibvorrichtung 6, 7 sobald diese in ihrer ersten Stellung ist, während der zweite Drehbegrenzungsanschlag 11 die Reibvorrichtung 6, 7 stoppt, sobald diese in ihrer zweiten Stellung ist.

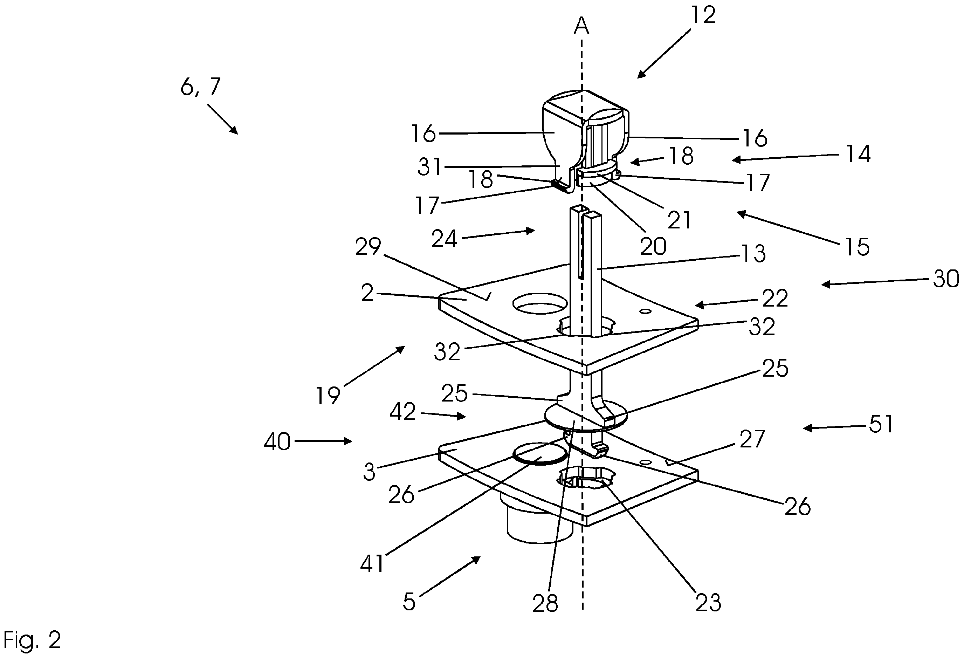

Die Reibvorrichtung 6, 7 ist am Bahnelement 1 angeordnet und in diesem Fall zweiteilig ausgebildet. Wie Fig. 2 zeigt, weist sie einen Reibkopf 12 und einen Reibkörper 13 auf, der an eine am Reibkopf 12 ausgebildete Aufnahme 14 einsteckbar ausgebildet ist.

Der Reibkopf 12 ist als Griffelement ausgebildet und weist eine Auszugssicherung 15 auf. Die Auszugssicherung 15 weist hier zwei Sperrriegel 16 auf, die diametral zueinander um eine Drehachse A der Reibvorrichtung 6, 7 angeordnet sind.

Die Sperrriegel 16 weisen jeweils ein freies Ende mit einer Sperrnase 17 auf. Die Sperrnasen 17 weisen eine Stützfläche 18 auf, die zum Abstützen an der Unterseite 19 (s. Fig. 1) der oberen Bahnelementebene 2 angeordnet und ausgebildet sind. Im montierten Zustand (s. Fig. 1) stützen sich die Stützflächen 18 sowohl in der ersten Stellung als auch in der zweiten Stellung an der Unterseite 19 der oberen Bahnelementebene 2 ab und verhindern das Ausziehen des Reibkopfs 12 bzw. der Reibvorrichtung 6, 7 aus dem Bahnelement 1.

Die Sperrriegel 16 sind mit dem dem freien Ende 17 gegenüber liegenden Ende fest mit einem Grundkörper des Reibkopfes 12 verbunden. Folglich sind die Sperrriegel 16 federnd gelagert und können quer zur Drehachse A aus ihrer dargestellten Position bewegt werden. Dabei können sie insbesondere in Richtung auf die Drehachse A zu bewegt werden. D.h., die Sperrriegel 16 können beispielsweise händisch zusammengedrückt werden. Auch wenn die Bewegungsbahn der Sperrriegel 16 dabei entlang eines Kreisbogenabschnitts erfolgt, wird unter dieser Bewegung eine Bewegung quer zur Drehachse A verstanden.

Des Weiteren sind am Reibkopf 12 eine Lagerführung 20 und ein Scherbenschutz, in diesem Fall ein oberer Scherbenschutz 21, angeordnet. Im montierten Zustand deckt der obere Scherbenschutz 21 eine obere Ausnehmung 22 in der oberen Bahnelementebene 2 ab, so dass das Eindringen von Fremdkörpern in den Bereich der Lagerführung 20 des Reibkopfes 12 bzw. in den Bereich einer Verdrehsicherung 30 verhindert wird.

Die Lagerführung 20 ist auf die Ausnehmung 22 in der oberen Bahnelementebene 2, die identisch zu einer Ausnehmung 23 in der unteren Bahnelementebene 3 ausgebildet ist, abgestimmt.

Während der Reibkopf 12 aus einem Kunststoffspritzteil besteht, ist der Reibkörper 13 aus einem plattenförmigen Metall ausgebildet. D.h., der Reibkörper 13 ist flächig ausgebildet. Das zum Aufsetzen des Reibkopfes 12 ausgebildete Ende des Reibkörpers 13 weist einen Aufnahmeschlitz 24 auf, der zur Aufnahme eines am Reibkopf 12 ausgebildeten Zapfens (hier nicht dargestellt) ausgebildet ist. Über den Aufnahmeschlitz 24 und den Zapfen wird eine verbesserte Passgenauigkeit des auf den Reibkörper 13 aufgesetzten Reibkopfes erreicht. Zudem wird eine Verdrehsicherung zwischen Reibkopf 12 und Reibkörper 13 bewirkt.

An dem dem Reibkopf 12 gegenüber liegenden Ende des Reibkörpers 13 ist ein Reibfuß 51 einstückig mit dem Reibkörper 13 ausgebildet und somit ebenfalls flächig ausgeformt.

Der Reibfuß 25 weist zwei obere Reibnasen 25 und zwei untere Reibnasen 26 auf. Die oberen Reibnasen 25 und die unteren Reibnasen 26 sind jeweils diametral um die Drehachse A zueinander angeordnet. Die oberen Reibnasen 25 sind dazu ausgebildet, an der Oberseite 27 der unteren Bahnelementebene 3 anzugreifen, während die untere Reibnase 26 zum Eingriff an einer Unterseite 33 (s. Fig. 1) des Trägerelements 5 ausgebildet ist. An die oberen Reibnasen 25 angrenzend und zwischen den oberen und unteren Reibnasen 25, 26 angeordnet, ist ein unterer Scherbenschutz 28, der flächig und rund ausgebildet ist und im montierten Zustand die Ausnehmung 23 in der unteren Bahnelementebene 3 abdeckt. Der untere Scherbenschutz 28 verhindert somit das Eindringen von Fremdkörpern in den Bereich der Fixierung des Bahnelementes 1 am Trägerelement 5.

Bei der Montage wird der Reibkörper 13 durch die Ausnehmung 22 in der oberen Bahnelementebene 2 geführt. Der Reibkopf 12 wird mit seiner Ausnehmung 14 auf den Reibkörper 13 aufgesteckt. Anschließend werden die beiden unteren Reibnasen 26 durch die Ausnehmung 23 in der unteren Bahnelementebene 3 hindurchgeführt, während die Sperrriegel 16 aufeinander zugedrückt, d.h. in Richtung der Drehachse, bewegt. Die Sperrriegel werden dann abschnittsweise durch die Ausnehmung 22 in die obere Bahnelementebene 2 geführt. Aufgrund der Entspannung der Sperrriegel 16 federn diese zurück in ihre Ausgangsstellung und die Stützflächen 18 stützen sich an der Unterseite 19 der oberen Bahnelementebene 2 ab, wodurch eine Demontage der Reibvorrichtung 6, 7 von dem Bahnelement 2 verhindert wird.

Im montierten Zustand erstrecken sich die Sperrriegel 16 somit ausgehend von einem Bereich oberhalb der Oberseite 29 der oberen Bahnelementebene 2 durch die Ausnehmung 22 hindurch, so dass sich die Sperrriegel 16 teilweise durch die obere Bahnelementebene 2 erstrecken und die Sperrnasen 17 mit ihren Stützflächen 18 nach dem Entspannen des Pressdrucks auf die Sperrriegel 16 an der Unterseite 19 der oberen Bahnelementebene 2 anliegen.

Weiter ist in Fig. 1 und 2 die Verdrehsicherung 30 dargestellt. Hierfür umfassen die Sperrriegel 16 Rastelemente 31 und die Ausnehmung 22 in der oberen Bahnelementebene 2 weist Rastelementaufnahmen 32 auf, die korrespondierend zu den Rastelementen 31 ausgebildet sind.

Dabei sind vier Rastelementaufnahmen 32 jeweils in einem Winkel von 90° zueinander an der Ausnehmung 22 angeordnet und derart zur Reibvorrichtung 6, 7 ausgerichtet, dass die Rastelemente 31 sowohl in der ersten Stellung der Reibvorrichtung 6, 7 als auch in ihrer zweiten Stellung in die Rastelementaufnahmen 32 eingreifen. Hierdurch wird sowohl in der ersten Stellung der Reibvorrichtung 6, 7 als auch in ihrer zweiten Stellung zum einen der Auszug der Reibvorrichtung 6, 7 und insbesondere des Reibkopfes 12 aus den Ausnehmungen 22, 23 und somit aus dem Bahnelement 1 blockiert und zum anderen Verdrehen der Reibvorrichtung 6, 7 verhindert.

Die Reibvorrichtung 1 kann von einem beispielsweise demontierten Bahnelement 1 erst entnommen werden, wenn die Sperrriegel 16 in Richtung der Drehachse A aufeinander zu bewegt werden und sich somit die Stützflächen 18 von der Unterseite 19 der oberen Bahnelementebene lösen.

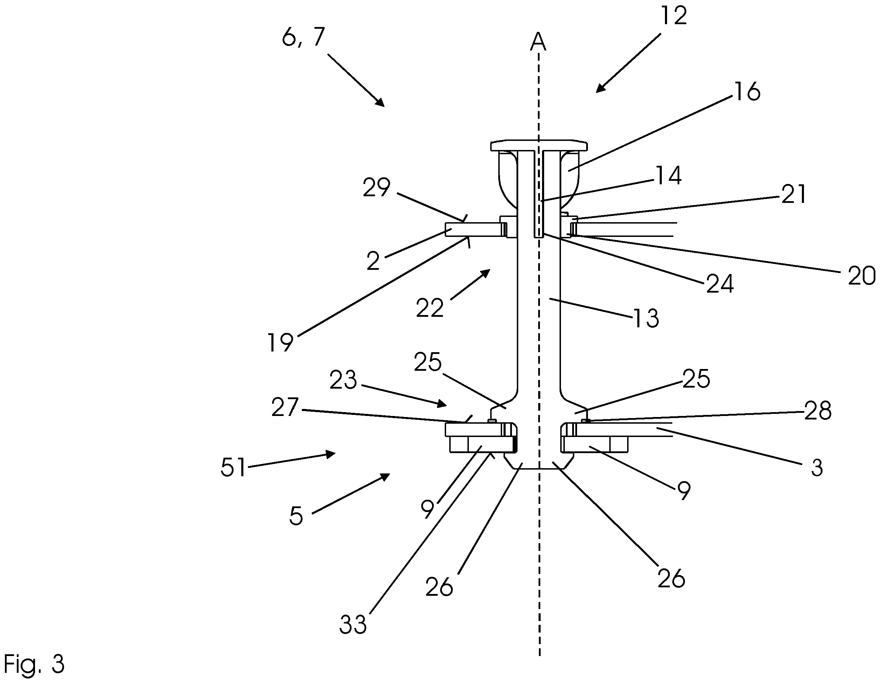

Weiter zeigen Fig. 1 und 2 eine Positioniervorrichtung 40, die Kräfte, die quer zur Drehachse A am Bahnelement 1 auftreten, aufnimmt. Die Positioniervorrichtung 40 weist einen am Trägerelement 5 angeordneten Aufnahmebolzen 41 auf, der sich durch ein als Bolzenaufnahme 42 ausgebildetes Loch in der unteren Bahnelementebene 3 erstreckt. Die Bolzenaufnahme 42 und der Aufnahmebolzen 41 sind passgenau zueinander ausgebildet. Das Bahnelement 1 ist senkrecht, d.h. in Drehachsenrichtung A, mit der Bolzenaufnahme 42 auf den Aufnahmebolzen aufsetzbar. Fig. 3 zeigt die Reibvorrichtung 6, 7 aus Fig. 1 und 2 im Querschnitt und in ihrer ersten Stellung. Der Reibkopf 12 ist mit seiner Aufnahme 14 in den Aufnahmeschlitz 24 am Reibkörper 13 eingesteckt. Die Lagerführung 20 ist in der Ausnehmung 22 angeordnet und ermöglicht eine runde Drehbewegung der Reibvorrichtung 6, 7. Der obere Scherbenschutz 21 deckt die Ausnehmung 22 zumindest teilweise ab und verhindert somit das Eindringen von Fremdkörpern. Der Sperrriegel 16 erstreckt sich von dem Bereich der Oberseite 29 der oberen Bahnelementebene 2 durch die Ausnehmung 22 hindurch, so dass die Stützfläche 18 an der Sperrnase 17 an der Unterseite 19 der oberen Bahnelementebene 2 anliegt und das Entfernen des Reibkopfes 12 in Richtung der Drehachse A nach oben verhindert. Ferner ist das Rastelement 31 in einer Rastelementaufnahme 32 eingerastet und verhindert ein Verdrehen der Reibvorrichtung 6, 7.

Im Bereich des Reibfußes 51 liegen die oberen Reibnasen 25 an der Oberseite 27 der unteren Bahnelementebene 3 an, während die unteren Reibnasen 26 mit der Unterseite 33 des Trägerelements 5 in Kontakt sind. D.h., die unteren Reibnasen 26 greifen an den freien Enden 10 der Aufnahmeschenkel 9 an. Jeweils eine obere Reibnase 25 und die in Drehachsenrichtung direkt unter der oberen Reibnase 26 angeordnete untere Reibnase 26 verbinden somit die untere Bahnelementebene 3 mit dem Trägerelement 5 formschlüssig. Dabei kann der Abstand zwischen der oberen Reibnase 25 und der unteren Reibnase 26 so gewählt werden, dass er passgenau, d.h. spielfrei, ist. Auch kann beispielsweise eine Kante der unteren Bahnelementebene 3 oder des Trägerelements 5 an- oder abgeschrägt sein und der Abstand zwischen der unteren Reibnase 26 und der oberen Reibnase 25 kann geringfügig kleiner ausgebildet sein als die Höhe der aufeinander liegenden unteren Bahnelementebene 3 und des Trägerelementes 5. Bei einer Drehbewegung der Reibvorrichtung 6, 7 in die erste Stellung erfolgt dann eine Verspannung der unteren Bahnelementebene 3 mit dem Trägerelement 5 zwischen den oberen Reibnasen 25 und den unteren Reibnasen 26. Selbstverständlich kann auch die Kontaktfläche an den Reibnasen 25, 26 zumindest abschnittsweise schräg oder rund ausgebildet sein, um beispielsweise eine Verspannung oder nur eine bessere Passung zu erreichen.

Der besondere Vorteil besteht darin, dass diese Schrägen oder Rundungen beim Drehen der Reibvorrichtung in Kombination mit einem federnd wirkenden Scherbenschutz 28, beispielsweise in Form eines vorgebogenen Federstahlblechs, es ermöglichen, dass eine spielfreie Verspannung erzeugt wird. Dazu legt sich der Scherbenschutz 28 beim Festspannen flächig an die Oberseite des oberen Bahnelementes an und schützt in dieser Stellung sowohl vor Schmutz oder Scherben, erzeugt aber gleichzeitig eine Vorspannung zwischen Bahnelement und Trägerelement.

Das untere Scherbenschutzblech 28 weist dabei idealerweise eine federnde Vorspannung auf, die für eine spielfreie Verbindung sorgt. Diese überträgt allerdings nicht die eigentlichen Haltekräfte. Die Haltekräfte werden nach Überwindung der Vorspannkraft durch den jeweiligen Reibfuß übertragen.

Ferner ist der untere Scherbenschutz 28 dargestellt, der mit den oberen Reibnasen 25 in Kontakt ist und die Ausnehmung 23 in der unteren Bahnelementebene 3 vollständig abdeckt, wodurch ein Eindringen von Fremdkörpern in den Bereich der Fixierung durch die Reibnasen 25, 26 verhindert wird.

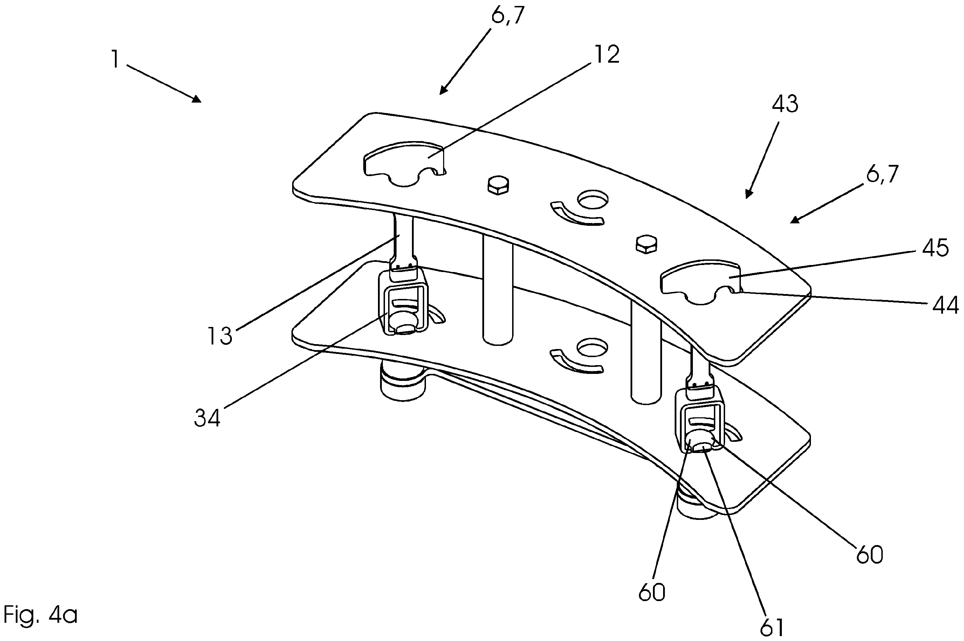

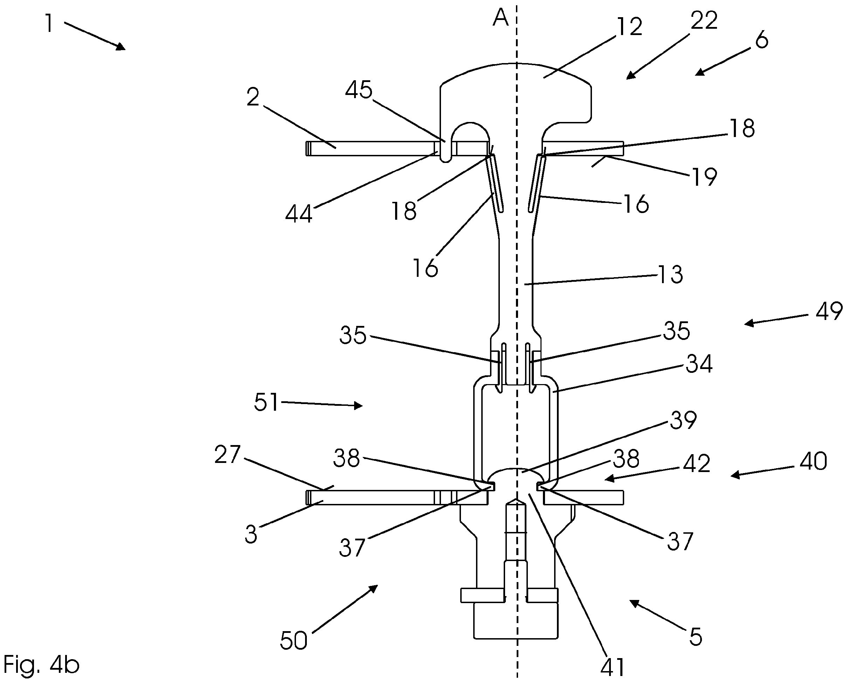

Fig. 4a und 4b zeigen schematisch ein Bahnelement 1 mit einer weiteren Ausführungsform der Reibvorrichtung 6, 7 in der zweiten Stellung. Die Reibvorrichtung 6, 7 ist mehrteilig ausgebildet und weist einen Reibkörper 13 mit einem einteilig mit dem Reibkörper 13 ausgebildeten Reibkopf 12 auf. Der Reibkörper 13 mit dem Reibkopf 12 ist flächig ausgebildet und aus einem Metallblech ausgeformt. An dem Reibkörper 13 ist an dem dem Reibkopf 12 gegenüber liegenden Ende ein über eine Schnellverbindung 49 angeordneter Reibfuß 51, der als Reibklammer 34 ausgebildet ist, angeordnet. Die Verbindung zwischen der Reibklammer 34 und dem Grundkörper 13 erfolgt über die Verbindungsvorrichtung 49, die zwei quer zur Drehachse A bewegbare Rastlaschen 35 aufweist, die an der Reibklammer 34 angreifen. Die Reibklammer 34 ist über die Rastlaschen 35 besonders schnell und einfach demontierbar bzw. montierbar.

Die Reibklammer 34 ist folglich an einem ersten Ende über die Reiblaschen 35 mit dem Reibkörper 13 verbunden. An einem dem ersten Ende gegenüberliegenden zweiten Ende 36 weist die Reibklammer 34 jeweils zwei freie Enden 37 auf. Die freien Enden 37 sind diametral um die Drehachse A angeordnet, d.h. sie zeigen in Richtung quer zur Drehachse A aufeinander zu.

In Fig. 4a und 4b ist die Reibklammer in ihrer ersten Stellung gezeigt. Die freien Enden 37 befinden sich in Eingriff mit einer am Trägerelement 5 angeordneten Nut 38. Aufgrund der in die Nut 38 eingreifenden freien Enden 37 wird ein Anheben des Bahnelementes 1 in Richtung der Drehachse A nach oben verhindert. Die Reibklammer 34 bildet somit mit der Nut 37 am Trägerelement 5 eine formschlüssige Verbindung, die die untere Bahnelementebene 3 an einer Bewegung in Drehachsenrichtung A blockiert.

Die Nut 38 am Trägerelement 5 ist oberhalb der Oberseite 27 der unteren Bahnelementebene 3 angeordnet. D.h., das Trägerelement 5 erstreckt sich mit einem Zapfen 50, an dem die Nut 37 angeordnet ist, durch die untere Bahnelementebene 3. Der am Zapfen 50 angeordnete Zapfenkopf 39 ist unsymmetrisch ausgebildet und weist in diesem Fall zwei diametral gegenüberliegende bogenförmige Abschnitte 60 und zwei abgeflachte Abschnitte 61 auf. Die unterhalb des Zapfenkopfs 39 angeordnete Nut 38 ist ringförmig, d.h. rund ausgebildet.

Die Reibklammer 34 und der Zapfenkopf 39 sind derart aufeinander angepasst, dass die Reibklammer in einer spannungsfreien Position und in ihrer zweiten Stellung am Zapfenkopf 39, und zwar im Bereich der abgeflachten Abschnitte 61, vorbei geführt werden kann, so dass die freien Enden 37 der Reibklammer im Bereich der Nut 38 unterhalb der abgeflachten Abschnitte liegen. Nach dem Drehen der Reibvorrichtung 6 in ihre erste Stellung greifen die freien Enden 37 weiterhin in der Nut 38 an, jedoch sind sie unterhalb der bogenförmigen Abschnitte 60 des Zapfenkopfes 39 angeordnet. Dabei sind der Zapfenkopf 39 und die Nut 38 passgenau auf die Reibvorrichtung 6, 7 und insbesondere auf den spannungsfreien Zustand der Klammer und die freien Enden 37 abgestimmt.

Alternativ kann die Nut 38 als Verdrehsicherung ausgebildet sein. Hierfür kann die Nut 38 beispielsweise im Horizontalschnitt eine ovale oder auch eckige Form aufweisen, so dass beim Drehen der Reibklammer 34 zwischen der ersten und der zweiten Stellung die Reibklammer 34 quer zur Drehachse A ausgelenkt wird. D.h. sie wird bei der Bewegung aufgespreizt und kommt dann in der zweiten Stellung in einem aufgespreizten Zustand in Position. Alternativ kann die Nut 38 auch derart ausgebildet sein, dass die Reibklammer 38 in der zweiten Stellung wieder in ihrer Ausgangsposition ist, d.h. beispielsweise in eine spannungsfreie Position zurückkehrt.

Insbesondere bei der Ausbildung der Nut 38 als Verdrehsicherung kann die Nut 38 im Horizontalschnitt eine ovale Form aufweisen oder der Nutgrund kann beispielsweise auch aus mindestens vier Abschnitten ausgebildet sein, die winklig aneinander stoßen, wobei sich beispielsweise mindestens zwei Abschnitte zumindest teilweise diametral gegenüber stehen und wobei der Abstand von zwei sich diametral gegenüberstehenden Winkelecken größer ist als der Abstand von zwei diametral zueinander stehenden Flächen.

Weiter zeigen Fig. 4a und 4b eine Positioniervorrichtung 40, die das aufgesetzte Bahnelement 1 quer zur Drehachse A fixiert. Die Positioniervorrichtung 40 ist als Aufnahmebolzen 41 mit einer dazu korrespondierenden Bolzenaufnahme 42 ausgebildet. Der Aufnahmebolzen 41 ist am Trägerelement 5 ausgebildet und unterhalb der Nut 38 und des Zapfenkopfes 39 angeordnet. Er weist in diesem Fall einen runden Querschnitt auf und erstreckt sich in die als Loch in der unteren Bahnelementebene 3 ausgebildete Bolzenaufnahme 42. Aufnahmebolzen 41 und Bolzenaufnahme 42 sind dabei spielfrei zueinander ausgebildet und nehmen somit sämtliche auf das Bahnelement 1 wirkende Querkräfte auf. Die Reibvorrichtung 6, 7 bleibt somit frei von Querkräften.

Bei der Montage wird das Bahnelement 1 mit der Reibvorrichtung 6, 7 senkrecht auf den Aufnahmebolzen 41 aufgesetzt. Dabei werden die freien Enden 37 der Reibklammer an den abgeflachten Abschnitten 61 des Zapfenkopfes 39 vorbeigeführt. Zum Fixieren des Bahnelementes 1 am Trägerelement 5 wird die Reibvorrichtung 6, 7 in diesem Fall um 90° im Uhrzeigersinn gedreht, so dass die freien Enden 37 unter die bogenförmigen Abschnitte 60 des Zapfenkopfes 39 greifen und eine formschlüssige Verbindung zwischen dem Trägerelement 5 und der unteren Bahnelementebene 3 herstellen.

Die Reibvorrichtung 6, 7 ragt durch eine Ausnehmung 22 in der oberen Bahnelementebene 2 durch und ist in dieser derart geführt, dass eine Drehbewegung ermöglicht wird. Um eine besonders gute Positionierung der Reibvorrichtung 6, 7 insbesondere auch eine unbeabsichtigte Entnahme aus dem Bahnelement 1 zu verhindern, sind am Reibkörper 13 zwei diametral um die Drehachse A angeordnete Sperrriegel 16 angeordnet. Die Sperrriegel 16 sind einstückig mit dem Reibkörper 13 ausgebildet und liegen in der Sperrstellung spannungsfrei vor. In der Sperrstellung liegen sie ferner jeweils mit einer an einem freien Ende angeordneten Stützfläche 18 an der Unterseite 19 der oberen Bahnelementebene 2 an und blockieren den Auszug der Reibvorrichtung 6, 7 in Drehachsenrichtung A nach oben.

Zur Demontage der Reibvorrichtung 6, 7 von dem Bahnelement 1 sind die Sperrriegel 16 von ihrer Sperrstellung (s. Fig. 4a, 4b) in eine Freigabestellung bewegbar. Hierfür können die freien Enden der Sperrriegel 16 jeweils quer zur Drehachse A und beide auf die Drehachse A zu gegen eine Federkraft, d.h. gegen eine Biegespannung aufeinander zu bewegt werden. In der Freigabestellung sind die Stützflächen 18 nicht weiter in Kontakt mit der Unterseite 19 des oberen Bahnelementes 2, sondern im Bereich des Reibkörpers 13 angeordnet. Die Reibvorrichtung 6, 7 kann senkrecht nach oben in Drehachsenrichtung A entnommen werden, sofern die Reibvorrichtung 6, 7 in ihrer zweiten Stellung ist, d.h. die Reibklammer 34 sich nicht im Eingriff mit der Nut 38 befindet.

Weiter zeigen Fig. 4a und 4b eine Verdrehbeschränkung 43 (Drehbegrenzungsanschläge), die als bogenförmiger Schlitz 44 in der oberen Bahnelementebene 2 ausgebildet ist und in die ein auf den bogenförmigen Schlitz 44 abgestimmter Verdrehriegel 45, der im Bereich des Reibkopfes 12 am Reibkörper 13 angeordnet ist, eingreift. Dabei sind der bogenförmige Schlitz 44 und der Verdrehriegel 45 derart aufeinander abgestimmt, dass der Verdrehriegel 45 in der ersten Stellung der Reibvorrichtung 6, 7 an eine erste Endfläche des bogenförmigen Schlitzes 44 und in der zweiten Stellung an eine der ersten Endfläche gegenüberliegende zweite Endfläche des bogenförmigen Schlitzes 44 anschlägt.

Der besondere Vorteil, der in Fig. 4a und 4b dargestellten Ausführungsform ist, dass aufgrund der Anordnung und der Befestigung der Reibvorrichtung 6, 7 senkrecht über dem Trägerelement 5 sowohl die Fixierung in Drehachsenrichtung A als auch die Fixierung quer zur Drehachsenrichtung A um die Drehachse A erfolgen, so dass insbesondere bei dieser Ausführungsform besonders wenig Querkräfte von der Reibvorrichtung 6, 7 aufgenommen werden müssen.

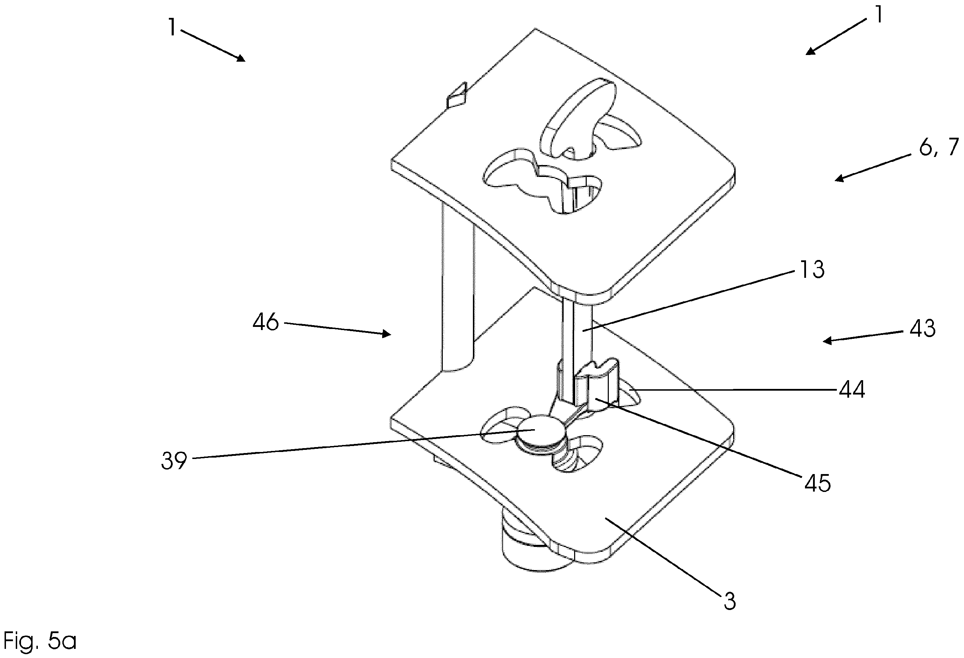

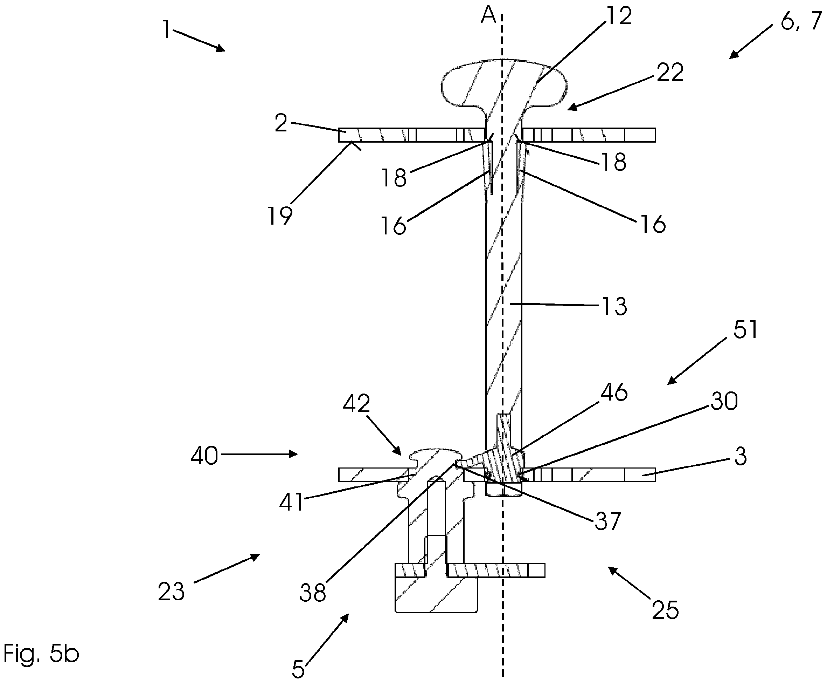

Fig. 5a und 5b zeigen einen Teilausschnitt eines Bahnelementes 1 mit einer weiteren alternativen Ausführungsform einer Reibvorrichtung 6, 7. Das Bahnelement 1 weist eine obere und eine untere Bahnelementebene 2, 3 auf. Durch die obere Bahnelementebene 2 hindurchragend ist ein Reibkörper 13 mit einem einstückig ausgebildeten Reibkopf 12 angeordnet. Reibkörper 13 und Reibkopf 12 sind flächig ausgebildet. In der oberen Bahnelementebene 2 ist eine als Lager ausgebildete Ausnehmung 22, durch die die Reibvorrichtung 6, 7 hindurchragt und in der die Reibvorrichtung 6, 7 bei der Drehbewegung geführt wird.

Unterhalb der oberen Bahnelementebene 2 sind am Reibkörper 13 zwei Sperrriegel 16 angeordnet, die mit einer Sperrfläche 18 an der Unterseite 19 der oberen Bahnelementebene 2 angreifen und das Entfernen der Reibvorrichtung 6, 7 aus dem Bahnelement 1 in Drehachsenrichtung A nach oben blockieren. Die Sperrriegel 16 sind entsprechend der Ausführungsform in Fig. 4a und 4b ausgebildet.

Die Sperrriegel 16 sind diametral um die Drehachse A am Reibkörper 13 angeordnet und aufeinander zu, d.h. auf die Drehachse A in die Freigabestellung bewegbar. Die Sperrriegel 16 sind federnd, d.h. ihre freien Enden können gegen eine Biegespannung von der dargestellten Sperrstellung in eine Freigabestellung bewegt werden. In der Freigabestellung besteht zwischen der Stützfläche 18 und der Unterseite 19 der oberen Bahnelementebene 2 kein Kontakt mehr.

An dem dem Reibkopf 12 gegenüberliegenden Ende des Reibkörpers 13 ist ein Reibfuß 51 im Bereich der unteren Bahnelementebene 3 angeordnet. Der Reibfuß 51 ist als Reibriegel 46 ausgebildet und am Reibkörper 13 gelagert. Der Reibriegel 46 ist mit dem Reibkörper 13 und dem Reibkopf 12 gemeinsam um die Drehachse A drehbar, jedoch als separater Baukörper ausgebildet.

Der Reibriegel 46 ist in seiner ersten Stellung dargestellt, d.h. ein freies Ende 37 des Reibriegels 46 ist in einer an einem Trägerelement 5 angeordneten Nut 38 in Eingriff und bildet eine formschlüssige Verbindung zwischen der unteren Bahnelementebene 3 und der Nut 38 aus.

Weiter zeigt Fig. 5b eine Positioniervorrichtung 40 die aus einem am Trägerelement 5 angeordneten Aufnahmebolzen 41 und einer in der unteren Bahnelementebene 3 ausgebildete Bolzenaufnahme 42 ausgebildet ist. Die Positioniervorrichtung 40 verhindert eine Bewegung des Bahnelementes 1 quer zur Drehachse A.

Weiter zeigt Fig. 5b eine Verdrehsicherung 30 im Bereich der unteren Bahnelementebene 3. Die Verdrehsicherung 30 ist als elastischer O-Ring ausgeführt zwischen einer Fläche des Reibfußes 51 und einer Innenfläche einer Ausnehmung 23 in der unteren Bahnelementebene 3 angeordnet. Der O-Ring bewirkt somit eine verstärkte Haftung zwischen der Reibvorrichtung 6, 7 und der unteren Bahnelementebene 3, wodurch ein unbeabsichtigtes Verdrehen der Reibvorrichtung 6, 7 verhindert wird.

Die Nut 38 am Trägerelement 5 ist im horizontalen Querschnitt rund ausgebildet. Der oberhalb der Nut 38 angeordnete Zapfenkopf 39 ist ebenfalls rund ausgebildet und ragt gleichmäßig über den Nutgrund hinaus. Die Nut ist somit oberhalb der unteren Bahnelementebene 3 und zwischen dem Aufnahmebolzen 41 und dem Zapfenkopf 38 angeordnet.

Weiter ist in Fig. 5a eine Verdrehbeschränkung 43 dargestellt. Die Verdrehbeschränkung 43 ist im Bereich der unteren Bahnelementebene 3 ausgebildet. Sie weist einen bogenförmigen Schlitz 44 in der unteren Bahnelementebene 3 auf und einen mit dem Reibriegel 46 einstückig ausgebildeten Verdrehriegel 45, der im Eingriff mit dem bogenförmigen Schlitz 44 ist. Dabei sind der Verdrehriegel 45 und der bogenförmige Schlitz 44 derart aufeinander abgestimmt, dass der Verdrehriegel 45 an einer ersten Endfläche des bogenförmigen Schlitzes 44 anliegt, wenn die Reibvorrichtung 6, 7 in ihrer ersten Stellung ist und an einer der ersten Endfläche gegenüberliegenden zweiten Endfläche des bogenförmigen Schlitzes 44, wenn die Reibvorrichtung 6, 7 in ihrer zweiten Stellung ist. Hierüber kann eine genaue Positionierung der Reibvorrichtung 6, 7 in der ersten und in der zweiten Stellung erreicht werden. Der bogenförmige Schlitz 44 und der Verdrehriegel 45 sind somit als Verdrehbegrenzungsanschläge ausgebildet.

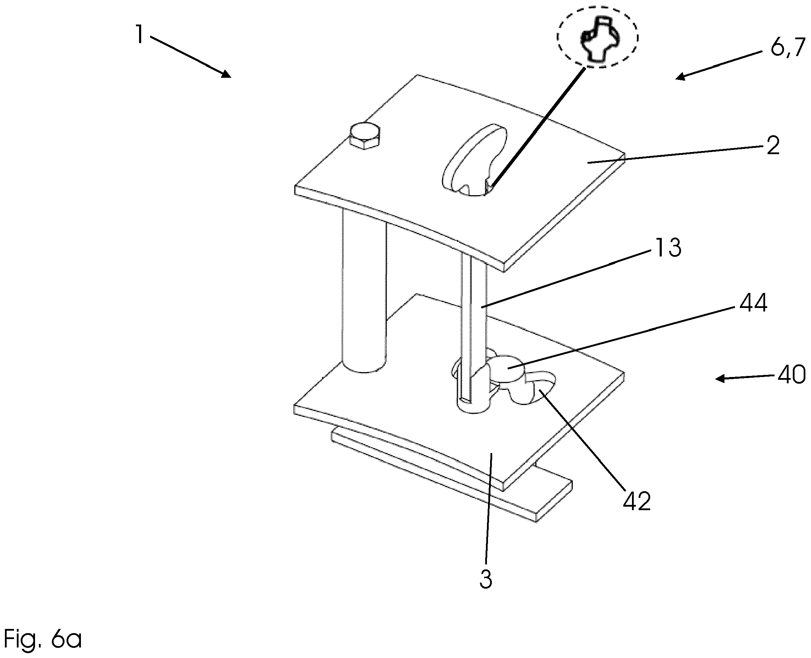

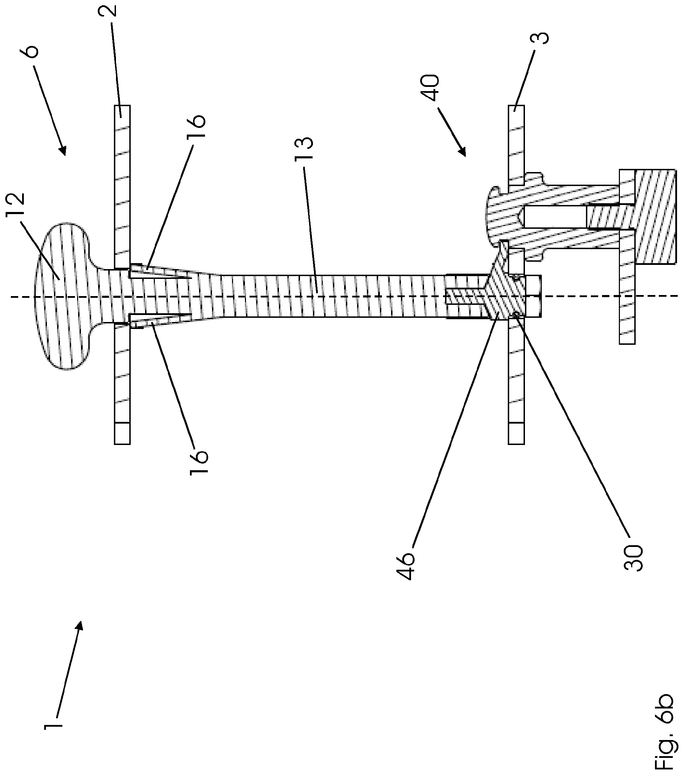

Fig. 6a und 6b zeigen einen Teilabschnitt eines Bahnelementes 1 mit einer weiteren alternativen Ausführungsform der Reibvorrichtung 6, 7. Der Reibkörper 13, der Reibkopf 12, die Sperrriegel 16 und die Positioniervorrichtung 40 sind entsprechend der Ausführungsform aus Fig. 5a und 5b ausgebildet. Der Reibriegel 46 ist deutlich einfacher ausgebildet als in Fig. 5a und 5b und weist als Verdrehbeschränkungsvorrichtung Anschläge im Bereich der oberen Führungsebene auf, bspw. nach dem im gestrichelten Kreis dargestellten Prinzip oder gem. der Ausführung, wie in den Figuren 5a, b gezeigt. Weiterhin ist eine als Verdrehsicherung 30 ausgebildeter O-Ring vorgesehen.

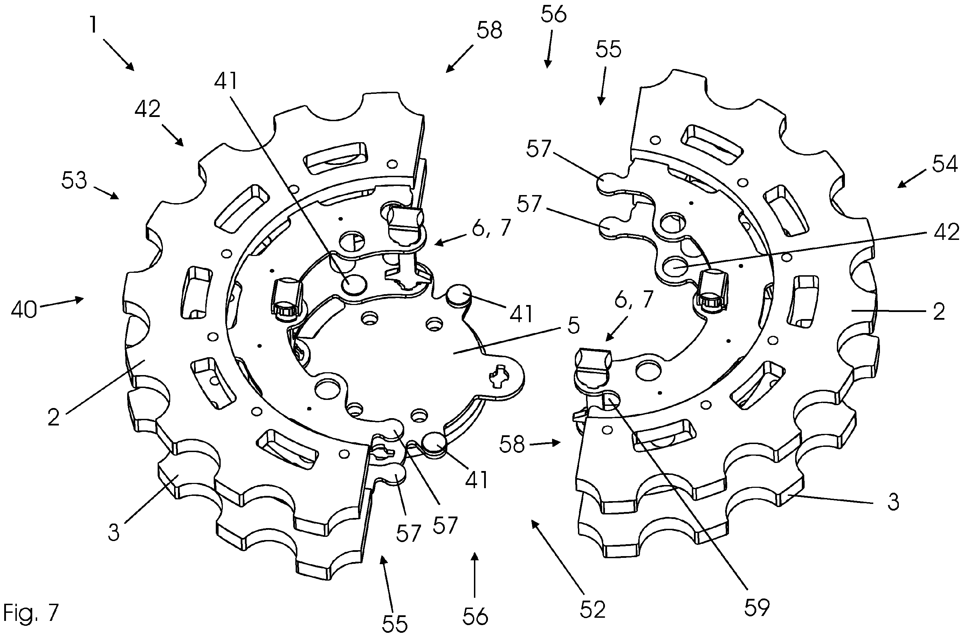

Fig. 7 zeigt ein Bahnelement 1 zum rotativen Transport von Behältern (hier nicht dargestellt). Das Bahnelement 1 ist mit einem Trägerelement 5 gekoppelt, das auf einer Antriebseinheit 52 angeordnet ist.

Das Bahnelement 1 ist in Fig. 7 im zerlegten Zustand dargestellt. Dabei weist es zwei Bahnelementsegmente 53, 54 auf, die jeweils eine obere und eine untere Bahnelementebene 2, 3 aufweisen. Die Bahnelementsegmente 53, 54 sind identisch ausgebildet, d.h., dass auch die unteren und oberen Bahnelementebenen 2, 3 jeweils identisch sind. Hierdurch ist der Herstellungsaufwand des Bahnelementes 1 besonders gering.

An ihren jeweils freien Enden 55, 58 weisen die Bahnelementsegmente 53, 54 eine Verbindungsvorrichtung 56 auf. Dabei weist jedes Bahnelementsegment 53, 54 an einem ersten freien Ende 55 jeweils sowohl in der oberen Bahnelementebene 2 als auch in der unteren Bahnelementebene 3 einen Verbindungszapfen 57 und an dem zweiten freien Ende eine zum Verbindungszapfen 57 korrespondierend ausgebildete Zapfenaufnahme 59 auf. Der Verbindungszapfen 57 weist jeweils in der x-y-Ebene, d.h. in einer Ebene quer zur Drehachse A der Reibvorrichtung 6, 7, einen flächigen Zapfensteg und einen flächigen runden Zapfenkopf auf. Die Zapfenaufnahme 59 ist entsprechend korrespondierend ausgebildet.

Der Verbindungszapfen 57 und die Zapfenaufnahme 59 weisen somit eine puzzleartige Verbindungsform auf, die im montierten Zustand eine Relativbewegung der Bahnelementsegmente 53, 54 zueinander in eine Richtung quer zur Drehachse A (hier durch Pfeil B dargestellt), d.h. in x-y-Ebene der Bahnelementsegmente 53, 54, verhindert.

An jedem Bahnelementsegment 53, 54 sind zwei Reibvorrichtungen 6, 7 angeordnet. Die hier dargestellten Reibvorrichtungen 6, 7 weisen im Gegensatz zu den Reibvorrichtungen aus Fig. 1 bis 3 keinen Scherbenschutz 19 im Bereich der unteren Bahnelementebene 3 auf, sind ansonsten jedoch identisch ausgebildet. Alternativ sind auch Reibvorrichtungen 6, 7 mit unterem Scherbenschutz 28 verwendbar.

An dem Trägerelement 5 sind zu einer Positioniervorrichtung 40 gehörende Aufnahmebolzen 41 angeordnet. Das montierte Bahnelementsegment 53, 54 ist mit ihren in den unteren Bahnelementebene 3 angeordneten Bolzenaufnahmen 42 senkrecht, d.h. in Drehachsenrichtung A, auf die zu den Bolzenaufnahmen 42 korrespondierende Aufnahmebolzen 41 aufgesetzt. Über die Positioniervorrichtung 40 werden somit die Drehkräfte der Antriebseinheit 52 in Betrieb auf die Bahnelementsegmente 53, 54 übertragen.

Die Reibvorrichtungen 6, 7 sind derart an den Bahnelementsegmenten 53, 54 angeordnet, dass sie jeweils in einer zweiten Stellung die Demontage oder Montage der Bahnelementsegmente 53, 54 in Drehachsenrichtung A ermöglichen. In einer ersten Stellung greifen die Reibvorrichtungen 6, 7 jedoch entsprechend den Ausführungen zu Fig. 1 bis 3 am Trägerelement 5 und der unteren Bahnelementebene 3 an und verhindern eine Demontage (ggf. eine Montage) der Bahnelementsegmente 53, 54 in Drehachsenrichtung A.

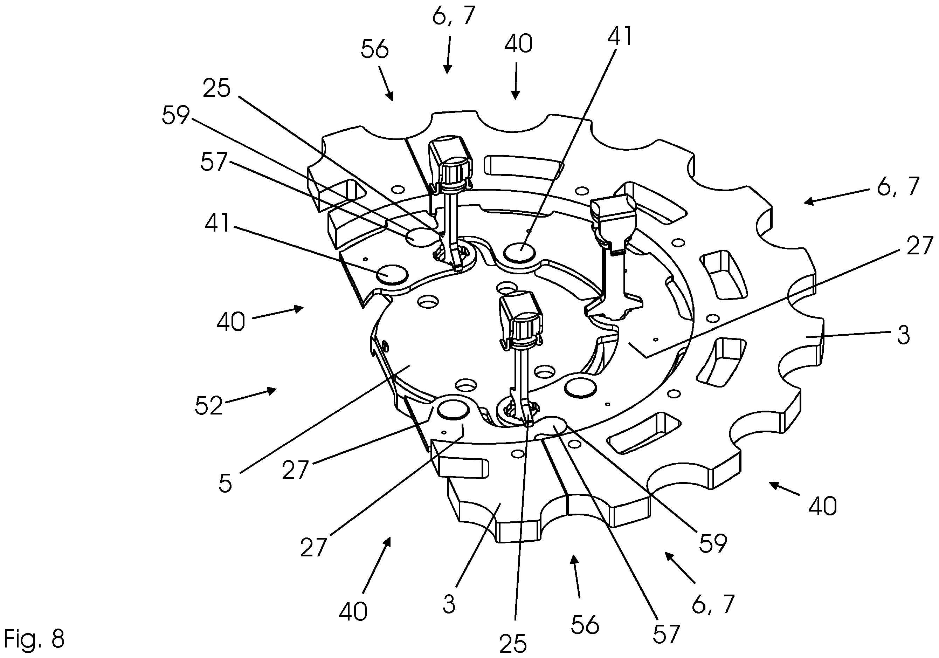

Fig. 8 zeigt abschnittsweise die beiden unteren Bahnelementebenen 3 aus Fig. 7. Die oberen Bahnelementebenen 2 wurden in dieser Darstellung zur besseren Übersicht weggelassen. Die unteren Bahnelementebenen 3 sind auf das Trägerelement 5 montiert, welches an einer Antriebseinheit 52 angeordnet ist. Die Reibvorrichtungen 6, 7 sind in ihrer ersten Stellung, der Verriegelungsstellung dargestellt, d.h. die Reibvorrichtungen 6, 7 greifen mit ihren oberen Reibnasen 25 an einer Oberseite 27 der unteren Bahnelementebene 3 an und mit ihren unteren Reibnasen 26 (nicht dargestellt) an eine Unterseite 33 des Trägerelements 5.

Weiter zeigt Fig. 8 die ineinander greifende Verbindungsvorrichtung 56, bei der der Verbindungszapfen 57 jeweils in der Zapfenaufnahme 59 eingreift und so eine feste Verbindung in einer Ebene (x-y-Ebene) quer zur Drehachse A zwischen den Bahnelementsegmenten 53, 54 herstellt.

Dabei sind die im Bereich der Verbindungsvorrichtung 56 angeordneten Reibvorrichtungen 6, 7 derart zur Verbindungsvorrichtung 56 ausgerichtet angeordnet, dass sie mit der oberen Reibnase 25 auf den Oberseiten 27 von beiden unteren Bahnelementebenen 3 aufliegen. D. h., die Reibvorrichtungen 6, 7 sind derart angeordnet, dass sie in ihrer ersten Stellung beide Bahnelementsegmente 53, 54 in Drehachsenrichtung A an dem Trägerelement 5 fixieren und eine Entnahme bzw. ein Abheben eines der Bahnelementsegmente 53, 54 verhindern.

### Bezugszeichenliste

- 1: Bahnelement
- 2: obere Bahnelementebene
- 3: untere Bahnelementebene
- 4: Abstandshalter
- 5: Trägerelement
- 6: Reibvorrichtung erste
- 7: Reibvorrichtung zweite
- 8: Unterseite untere Bahnelementebene
- 9: Aufnahmeschenkel
- 10: freie Enden Aufnahmeschenkel
- 11: Drehbegrenzungsanschlag
- 12: Reibkopf
- 13: Reibkörper
- 14: Aufnahme am Reibkopf für Reibkörper
- 15: Auszugssicherung
- 16: Sperrriegel
- 17: Sperrnase
- 18: Stützfläche Sperrnase
- 19: Unterseite obere Bahnelementebene
- 20: Lagerführung Reibkopf
- 21: oberer Scherbenschutz
- 22: Ausnehmung obere Bahnelementebene
- 23: Ausnehmung untere Bahnelementebene
- 24: Aufnahmeschlitz Reibkopf
- 25: obere Reibnase
- 26: untere Reibnase
- 27: Oberseite untere Bahnelementebene
- 28: unterer Scherbenschutz
- 29: Oberseite obere Bahnelementebene
- 30: Verdrehsicherung
- 31: Rastelement
- 32: Rastelementaufnahme
- 33: Unterseite Trageelement
- 34: Reibklammer
- 35: Rastlaschen
- 36: zweites Ende Reibklammer
- 37: freie Enden Reibklammer
- 38: Nut am Trägerelement
- 39: Zapfen kopf
- 40: Positioniervorrichtung
- 41: Aufnahmebolzen
- 42: Bolzenaufnahme
- 43: Verdrehbeschränkung
- 44: bogenförmige Schlitz
- 45: Verdrehriegel
- 46: Reibriegel
- 47: Trägerzapfen
- 48: Tragespange
- 49: Verbindungsvorrichtung
- 50: Zapfen
- 51: Reibfuß
- 52: Antriebseinheit
- 53: Bahnelementsegmente
- 54: Bahnelementsegmente
- 55: erstes freies Ende Bahnelementsegmente
- 56: Verbindungsvorrichtung
- 57: Verbindungszapfen
- 58: zweites freies Ende
- 59: Zapfenaufnahme
- 60: bögenformige Abschnitte Zapfenkopf
- 61: abgeflachte Abschnitte Zapfenkopf
- A: Drehachsenrichtung
- B: quer zur Richtung der Drehachse

## Patentansprüche

1. Behältertransportanlage mit
- einem auswechselbaren Bahnelement (1) zum Führen von Behältern, mit mindestens einer oberen und einer unteren Bahnelementebene (2, 3),
- einem Trägerelement (5) zur Aufnahme des Bahnelementes (1),
- einer zwischen mindestens zwei Stellungen drehbar um eine Drehachse (A) an dem Bahnelement (1) gelagerten Reibvorrichtung (6, 7),
- wobei die Reibvorrichtung (6, 7) in einer ersten Stellung die untere Bahnelementebene (3) mit dem Trägerelement (5) in Richtung der Drehachse (A) fixiert und in einer zweiten Stellung das Bahnelement (1) von dem Trägerelement (5) in Richtung der Drehachse (A) entnehmbar ist und
- einer Auszugssicherung (15) zur Fixierung der Reibvorrichtung (6, 7) an dem Bahnelement (1) in Drehachsenrichtung (A),
**dadurch gekennzeichnet, dass** die Auszugssicherung (15) einen zum Eingriff an der oberen Bahnelementebene (2) ausgebildeten Sperrriegel (16) aufweist, der zwischen einer Sperrstellung und einer Freigabestellung bewegbar ist, und **dass** der Sperrriegel (16) quer zur Drehachse (A) bewegbar ist.

2. Behältertransportanlage nach Anspruch 1, **dadurch gekennzeichnet, dass** der Sperrriegel (16) federnd gelagert ist.

3. Behältertransportanlage nach einem der vorherigen Ansprüche, **dadurch gekennzeichnet, dass** der Sperrriegel (16) sich ausgehend von seinem ersten Ende durch eine Ausnehmung in der oberen Bahnelementebene (2) erstreckt.

4. Behältertransportanlage nach einem der vorherigen Ansprüche, **dadurch gekennzeichnet, dass** Reibvorrichtung (6,7) mehrteilig ausgebildet ist und einen Reibkörper (13), einen Reibkopf (12) und/oder Reibfuß (51) aufweist.

5. Behältertransportanlage nach einem der vorherigen Ansprüche, **dadurch gekennzeichnet, dass** die Reibvorrichtung (6, 7) eine Verdrehsicherung (30) gegen ein unbeabsichtigtes Verdrehen um die Drehachse (A) aufweist.

6. Behältertransportanlage nach dem Anspruch 5, **dadurch gekennzeichnet, dass** die Verdrehsicherung (30) ein Rastelement (31) mit einer dazu korrespondierend ausgebildeten Rastelementaufnahme (32) aufweist

7. Behältertransportanlage nach einem der vorherigen Ansprüche 5 oder 6, **dadurch gekennzeichnet, dass** die Verdrehsicherung (30) eine Klemmvorrichtung aufweist.

8. Behältertransportanlage nach einem der vorherigen Ansprüche, **dadurch gekennzeichnet, dass** die Reibvorrichtung (6, 7) zum Fixieren des Bahnelementes (1) an dem Trägerelement (5) in Drehachsenrichtung (A) ein Riegelelement aufweist, das in der Sperrstellung eine formschlüssige Verbindung mit dem Trägerelement (5) aufweist.

9. Behältertransportanlage nach Anspruch 8, **dadurch gekennzeichnet, dass** das Riegelelement eine obere Reibnase (25) und eine untere Reibnase (26) aufweist, wobei die obere Reibnase (25) zum Eingriff an der Oberseite der unteren Ebene und die untere Reibnase (26) zum Eingriff an der Unterseite des Trägerelementes (5) ausgebildet und angeordnet sind.

10. Behältertransportanlage nach einem der vorhergehenden Ansprüche 8 oder 9, **dadurch gekennzeichnet, dass** das Riegelelement einen Reibriegel (46) oder eine Reibklammer (34) aufweist.

11. Behältertransportanlage nach einem der vorhergehenden Ansprüche 8 bis 10, **dadurch gekennzeichnet, dass** die Reibklammer (34) zwei zueinander zeigende, quer zur Drehachse (A) ausgerichtete, freie Enden (36, 37) aufweist.

12. Behältertransportanlage nach einem der vorhergehenden Ansprüche 8 bis 11, **dadurch gekennzeichnet, dass** der Reibriegel (46) und/oder die Reibklammer (34) jeweils korrespondierend zu einer am Trägerelement (5) angeordneten Nut (38) ausgebildet sind.

13. Behältertransportanlage nach einem der vorhergehenden Ansprüche, **dadurch gekennzeichnet, dass** die Reibvorrichtung (6, 7) mindestens einen Scherbenschutz (21, 28) aufweist.

14. Behältertransportanlage nach Anspruch 13, **dadurch gekennzeichnet, dass** ein unteres Scherbenschutzblech (28) vorgesehen ist, welches eine federnde Vorspannung für eine spielfreie Verbindung erzeugt, welches aber nicht die Haltekräfte überträgt.

15. Behältertransportanlage nach einem der vorhergehenden Ansprüche, **dadurch gekennzeichnet, dass** eine Positioniervorrichtung (40) zur Fixierung des Bahnelementes (1) quer zur Richtung der Drehachse (A) angeordnet ist.

16. Behältertransportanlage nach Anspruch 15, **dadurch gekennzeichnet, dass** die Positioniervorrichtung (40) am Trägerelement (5) angeordnet ist.

17. Behältertransportanlage nach einem der vorhergehenden Ansprüche 15 oder 16, **dadurch gekennzeichnet, dass** die Positioniervorrichtung (40) mindestens einen Aufnahmebolzen (41) und eine zu dem Aufnahmebolzen (41) korrespondierende Bolzenaufnahme (42) aufweist, wobei die Bolzenaufnahme (42) an der unteren Bahnelementebene (3) und der Aufnahmebolzen (41) an dem Trägerelement (5) angeordnet ist.

18. Behältertransportanlage nach einem der vorhergehenden Ansprüche, **dadurch gekennzeichnet, dass** das Trägerelement (5) mindestens einem Aufnahmeschenkel (9) aufweist.

19. Behältertransportanlage nach einem der vorhergehenden Ansprüche, **dadurch gekennzeichnet, dass** an dem auswechselbaren Bahnelement (1), insbesondere an mindestens einer der Bahnelementebene (2, 3) mindestens eine Gleitleiste oder eine Gleitelemente vorgesehen ist.

## Claims

1. Container conveying system comprising
- a replaceable rail element (1) for guiding containers, with at least one upper and one lower rail element plane (2, 3),
- a carrier element (5) for accommodating the rail element (1),
- a friction mechanism (6, 7) that is rotatable between at least two positions about an axis of rotation (A) mounted at the rail element (1),
- wherein the friction mechanism (6, 7), in a first position, secures the lower rail element plane (3) with the carrier element (5) in the direction of the axis of rotation (A), and, in a second position, the rail element (1) can be removable from the carrier element (5) in the direction of the axis of rotation (A), and
- an extraction blocking element (15) for securing the friction mechanism (6, 7) to the rail element (1) in the direction of the axis of rotation (A),
**characterised in that** the extraction blocking element (15) comprises a blocking bar (16) formed at the upper rail element plane (2), which can be moved between a blocking position and a release position, and that the blocking bar (16) can be moved transversely to the axis of rotation (A).

2. Container conveying system according to claim 1, **characterised in that** the blocking bar (16) is mounted such as to be spring-loaded.

3. Container conveying system according to any one of the preceding claims, **characterised in that** the blocking bar (16), starting from a first end, extends throughout a cut-out opening in the upper rail element plane (2).

4. Container conveying system according to any one of the preceding claims, **characterised in that** the friction mechanism (6, 7) is configured as multi-part, and comprises a friction body (13), a friction head (12), and/or a friction foot (51).

5. Container conveying system according to any one of the preceding claims, **characterised in that** the friction mechanism (6, 7) comprises a rotation prevention element (30) to prevent unintentional rotation about the axis of rotation (A).

6. Container conveying system according to claim 5, **characterised in that** the rotation prevention element (30) comprises a latch element (31), with a latch element receiver (32) configured such as to correspond.

7. Container conveying system according to any one of the preceding claims 5 or 6, **characterised in that** the rotation prevention element (30) comprises a clamping device.

8. Container conveying system according to any one of the preceding claims, **characterised in that** the friction mechanism (6, 7), in order to secure the rail element (1) to the carrier element (5), comprises a bar element in the direction of the axis of rotation (A), which in the blocking position forms a positive-fit connection with the carrier element (5).

9. Container conveying system according to claim 8, **characterised in that** the bar element comprises an upper friction nose (25) and a lower friction nose (26), wherein the upper friction nose (25) is configured and arranged such as to engage on the upper side of the lower plane, and the lower friction nose (26) such as to engage on the lower side of the carrier element (5).

10. Container conveying system according to one of the preceding claims 8 or 9, **characterised in that** the bar element comprises a friction bar (46) or a friction chamber (34).

11. Container conveying system according to any one of the preceding claims 8 to 10 , **characterised in that** the friction chamber (34) comprises two free ends (36, 37), facing towards one another and transverse to the axis of rotation (A).

12. Container conveying system according to one of the preceding claims 8 to 11, **characterised in that** the friction bar (46) and/or the friction clamp (34) are in each case configured such as to correspond to a slot (38) arranged at the carrier element (5).

13. Container conveying system according to one of the preceding claims, **characterised in that** the friction mechanism (6, 7) comprises at least one shard protection element (21, 28).

14. Container conveying system according to claim 13, **characterised in that** a lower shard protection plate (28) is provided, which produces a spring-loaded pre-tension for a connection free of play, but which does not transfer the retaining forces.

15. Container conveying system according to one of the preceding claims, **characterised in that** a positioning device (40) for securing the rail element (1) is arranged transverse to the direction of the axis of rotation (A).

16. Container conveying system according to claim 15, **characterised in that** the positioning device (40) is arranged at the carrier element (5).

17. Container conveying system according to one of the preceding claims 15 or 16, **characterised in that** the positioning device (40) comprises at least one receiver bolt (41), and a bolt receiver (42) corresponding to the receiver bolt (41), wherein the bolt receiver (42) is arranged at the lower rail element plane (3), and the receiver bolt (41) is arranged at the carrier element (5).

18. Container conveying system according to one of the preceding claims, **characterised in that** the carrier element (5) comprises at least one receiver limb (9).

19. Container conveying system according to one of the preceding claims, **characterised in that** at least one slide strip or a slide element is provided at the replaceable rail element (1), in particular at least at one of the rail element planes (2, 3).

## Revendications

1. Installation de transport de contenants avec
- un élément de trajectoire (1) échangeable servant à guider des contenants, avec au moins un plan d'élément de trajectoire supérieur et un plan d'élément de trajectoire inférieur (2, 3),
- un élément de support (5) servant à loger l'élément de trajectoire (1),
- un dispositif de friction (6, 7) monté entre au moins deux positions de manière à pouvoir tourner autour d'un axe de rotation (A) au niveau de l'élément de trajectoire (1),
- dans laquelle le dispositif de friction (6, 7) fixe dans une première position le plan d'élément de trajectoire inférieur (3) avec l'élément de support (5) en direction de l'axe de rotation (A) et, dans une deuxième position, l'élément de trajectoire (1) peut être retiré de l'élément de support (5) en direction de l'axe de rotation (A), et
- un système de sécurité de retenue (15) servant à fixer le dispositif de friction (6, 7) au niveau de l'élément de trajectoire (1) dans le sens de l'axe de rotation (A),
**caractérisée en ce que** le système de sécurité de retenue (15) présente un verrou de blocage (16) réalisé pour venir en prise au niveau du plan d'élément de trajectoire supérieur (2), qui peut être déplacé entre une position de blocage et une position de déblocage,
et que le verrou de blocage (16) peut être déplacé de manière transversale par rapport à l'axe de rotation (A).

2. Installation de transport de contenants selon la revendication 1, **caractérisée en ce que** le verrou de blocage (16) est monté sur ressorts.

3. Installation de transport de contenants selon l'une quelconque des revendications précédentes, **caractérisée en ce que** le verrou de blocage (16) s'étend en partant de sa première extrémité à travers un évidement dans le plan d'élément de trajectoire supérieur (2).

4. Installation de transport de contenants selon l'une quelconque des revendications précédentes, **caractérisée en ce que** le dispositif de friction (6, 7) est réalisé en plusieurs parties et présente un corps de friction (13), une tête de friction (12) et/ou une embase de friction (51).

5. Installation de transport de contenants selon l'une quelconque des revendications précédentes, **caractérisée en ce que** le dispositif de friction (6, 7) présente un système de sécurité anti-rotation (30) pour empêcher toute rotation involontaire autour de l'axe de rotation (A).

6. Installation de transport de contenants selon la revendication 5, **caractérisée en ce que** le système de sécurité anti-rotation (30) présente un élément d'enclenchement (31) avec un logement d'élément d'enclenchement (32) réalisé de manière correspondante à ce dernier.

7. Installation de transport de contenants selon l'une quelconque des revendications 5 ou 6, **caractérisée en ce que** le système de sécurité anti-rotation (30) présente un dispositif de serrage.

8. Installation de transport de contenants selon l'une quelconque des revendications précédentes, **caractérisée en ce que** le dispositif de friction (6, 7) présente, pour fixer l'élément de trajectoire (1) au niveau de l'élément de support (5) dans la direction d'axe de rotation (A), un élément à verrou, qui présente, dans la position de blocage, une liaison à complémentarité de forme avec l'élément de support (5).

9. Installation de transport de contenants selon la revendication 8, **caractérisée en ce que** l'élément à verrou présente un ergot de friction supérieur (25) et un ergot de friction inférieur (26), dans laquelle l'ergot de friction supérieur (25) est réalisé et disposé pour venir en prise au niveau du côté supérieur du plan inférieur et l'ergot de friction inférieur (26) est réalisé et disposé pour venir en prise au niveau du côté inférieur de l'élément de support (5).

10. Installation de transport de contenants selon l'une quelconque des revendications précédentes 8 ou 9, **caractérisée en ce que** l'élément à verrou présente un verrou de friction (46) ou une attache de friction (34).

11. Installation de transport de contenants selon l'une quelconque des revendications 8 à 10, **caractérisée en ce que** l'attache de friction (34) présente deux extrémités (36, 37) libres pointant l'une en direction de l'autre, orientée de manière transversale par rapport à l'axe de rotation (A).

12. Installation de transport de contenants selon l'une quelconque des revendications précédentes 8 à 11, **caractérisée en ce que** le verrou de friction (46) et/ou l'attache de friction (34) sont réalisées de manière à correspondre respectivement à une rainure (38) disposée au niveau de l'élément de support (5).

13. Installation de transport de contenants selon l'une quelconque des revendications précédentes, **caractérisée en ce que** le dispositif de friction (6, 7) présente au moins une protection anti-tesson (21, 28).

14. Installation de transport de contenants selon la revendication 13, **caractérisée en ce qu'**une tôle de protection anti-tesson (28) inférieure est prévue, laquelle génère une précontrainte élastique pour une liaison sans jeu, laquelle ne transmet toutefois pas les forces de maintien.

15. Installation de transport de contenants selon l'une quelconque des revendications précédentes, **caractérisée en ce qu'**un dispositif de positionnement (40) servant à fixer l'élément de trajectoire (1) est disposé de manière transversale par rapport à la direction de l'axe de rotation (A).

16. Installation de transport de contenants selon la revendication 15, **caractérisée en ce que** le dispositif de positionnement (40) est disposé au niveau de l'élément de support (5).

17. Installation de transport de contenants selon l'une quelconque des revendications 15 ou 16,
**caractérisée en ce que** le dispositif de positionnement (40) présente au moins un boulon de logement (41) et un logement de boulon (42) correspondant au boulon de logement (41), dans laquelle le logement de boulon (42) est disposé au niveau du plan d'élément de trajectoire inférieur (3) et le boulon de logement (41) est disposé au niveau de l'élément de support (5).

18. Installation de transport de contenants selon l'une quelconque des revendications précédentes, **caractérisée en ce que** l'élément de support (5) présente au moins une branche de logement (9).

19. Installation de transport de contenants selon l'une quelconque des revendications précédentes,
**caractérisée en ce qu'**au moins une barre coulissante ou un élément coulissant est prévue/prévu au niveau de l'élément de trajectoire (1) échangeable, en particulier au niveau d'au moins un des plans d'élément de trajectoire (2, 3).
